(19) Europäisches Patentamt
European Patent Office
Office européen des brevets

(11) EP 0 611 377 B1

(12) **EUROPEAN PATENT SPECIFICATION**

(45) Date of publication and mention of the grant of the patent:
**01.08.2001 Bulletin 2001/31**

(21) Application number: **92924147.9**

(22) Date of filing: **26.10.1992**

(51) Int Cl.[7]: **C08F 4/602**, C08F 10/00

(86) International application number:
**PCT/US92/09250**

(87) International publication number:
**WO 93/09148 (13.05.1993 Gazette 1993/12)**

# (54) PROCESS FOR PRODUCING POLYOLEFIN

VERFAHREN ZUR HERSTELLUNG VON POLYOLEFINEN

PROCEDE DE PRODUCTION D'UNE POLYOLEFINE

(84) Designated Contracting States:
**BE DE ES FR GB IT NL SE**

(30) Priority: **07.11.1991 US 788972**
**09.04.1992 US 865579**
**29.07.1992 US 922124**

(43) Date of publication of application:
**24.08.1994 Bulletin 1994/34**

(73) Proprietor: **ExxonMobil Chemical Patents Inc.**
**Baytown, TX 77520-5200 (US)**

(72) Inventors:
- **JEJELOWO, Moses, Olukayode**
**Kingwood, TX 77345 (US)**
- **BAMBERGER, Robert, Lee**
**Crosby, TX 77532 (US)**

(74) Representative: **Dew, Melvyn John**
**ExxonMobil Chemical Europe Inc.**
**Law Technology**
**P.O.Box 105**
**1830 Machelen (BE)**

(56) References cited:
**EP-A- 0 277 004**
**EP-A- 0 310 734**
**EP-A- 0 316 155**
**EP-A- 0 360 492**
**EP-A- 0 436 328**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 611 377 B1

Printed by Jouve, 75001 PARIS (FR)

## Description

### FIELD OF THE INVENTION

This invention relates to processes for olefin polymerization and to the resultant polyolefin product, particularly those having broadened molecular weight distribution. Particularly, but not exclusively, this invention also relates to the use of mixed polymerization catalysts for controlling the molecular weight distribution of a polymer.

### BACKGROUND OF THE INVENTION

Olefin polymerization catalysts comprising a metallocene and an aluminum alkyl component have long been known. See, for example, AU-A-2436/88, DE-A-2,608,863 published September 9, 1977, DE-A-2,608,933 published September 9, 1977, EP-A-0035242 published September 9, 1991 and EP-A-129368 published September 9, 1991 which disclose catalyst systems which are commercially useful for the polymerization of ethylene. The molecular weight of the polymer product can be controlled by adjusting the reaction temperature or the amount of cocatalyst, or by the addition of hydrogen.

The later publications require use of alumoxane or cocatalyst, which is produced by reacting an aluminum alkyl with water. Such reaction is very rapid and highly exothermic.

Alumoxanes may be prepared, for example, by adding extremely finely divided water, such as in the form of a humid solvent, to a solution of aluminum alkyl in benzene, other aromatics, or aliphatic hydrocarbons; or by reacting aluminum alkyl with a hydrated salt, such as hydrated copper sulfate.

See U.S. Pat. Nos. 4,912,075, 4,937,301, 4,925,821, 4,937,217, 4,935,397 and 5,006,500 for teachings on alumoxane production.

U.S. Patent No. 5,006,500 describes procedures by which an alumoxane is produced directly on a silica support by reacting an alkyl aluminum with water-containing silica. Such alumoxane-silica product is then reacted with a metallocene to yield a supported metallocene-alumoxane catalyst useful in the polymerization of olefins.

Catalyst components comprising titanium and zirconium metallocenes produce polymers having a typically narrow molecular weight distribution (MWD), i.e. Mw/Mn. Although there are many commercial applications for polyolefins with a narrow MWD as a desirable property, it is often desirable to have a polyolefin with a broader MWD, for example to ease the processability of polyolefins into finished form. The above cited publications neither disclose polyethylenes having a broad MWD nor how to obtain such polyethylenes.

A method of broadening the molecular weight distribution of polyolefins has long been desired by and needed in the industry. For many applications, such as extrusion and molding processes, it is highly desirable to use polyolefins which have a broad MWD. Such polymers have lower melt viscosity and can have higher melt strength. Lower melt viscosity allows a film producer to operate at lower extruder pressures and temperatures, and with lower energy requirements. Higher melt strength allows a film producer to operate at faster blown film rates. At the same time such polymers exhibit reduced melt flow perturbations.

Another need in the industry is a method to improve the balance between those film properties which increase and those which decrease as product crystallinity increases. For example, in ethylene-alpha-olefin copolymers, product crystallinity is controlled by the alpha-olefin content. As crystallinity increases, film tensile strength measured at low film elongation increases, but film tear resistance and impact resistance both decrease. Tensile strength at low elongation is an important film property when the film is used to make bags, especially those with handles. As tensile strength at low elongation increases, the load which can be supported without severe elongation of the bag wall and bag handles increases. As tear and dart impact resistance increase, the resistance to puncture and the load which can be supported after a puncture has occurred both increase.

In addition, a method of increasing the tensile impact strength of polyolefins while maintaining processability has long been desired by and needed in industry. Such a polymer with a balance of strength and processability could be utilized for manufacturing molded and film products which are stronger than the prior art materials while requiring the same processing energy or cycle time, or could be utilized for manufacturing molded and film products which are as strong as the prior art materials with less processing energy or cycle time.

Several methods in the past have been directed toward making broader molecular weight distribution polyolefins. U.S. Patent No. 4,310,648 discloses a catalytic reaction product of a titanium compound, a zirconium compound, an organomagnesium compound and a halide source. The reaction product, a heterogeneous catalyst, when employed in combination with aluminum alkyl, is useful for the production, at high activity, of broad molecular weight polyethylenes.

It is sometimes also desirable to have a polyethylene having a narrow molecular weight distribution and a high molecular weight. For example, U.S. Patent No. 4,361,685 discloses the use of organic soluble chromium and zirconium compounds employed in combination with a supported catalyst system comprising an organometallic activating agent and a trivalent or tetravalent titanium compound. The polymers obtained have a high molecular weight and a narrow molecular weight distribution.

In "Molecular Weight Distribution And Stereoregularity Of Polypropylenes Obtained With $Ti(OC_4H_9)_4Al_2(C_2H_3)_3$ Catalyst System"'; Polymer, Pg. 469-471, 1981, Vol. 22, April, Doi, et al. disclose propylene polymerization with a catalyst, which at about 41°C obtains a soluble catalyst and an insoluble catalyst fraction, one with a "homogeneous catalytic centre" and the other with a "heterogeneous catalytic centre". Polymerization at that temperature obtains polypropylene having a bimodal molecular weight distribution. Also, U.S. Patent No. 4,931,417 describes the use of bis(methyl-t-butyl cyclopentadienyl) zirconium dichloride to obtain atactic polypropylene, but has no teachings regarding the production of processable crystalline polymers or polyethylenes.
U.S. Patent No. 4,808,561 discloses a metallocene polymerization catalyst having cyclopentadienyl rings substituted with hydrocarbyl groups such as alkyl, aryl, alkylaryl, or arylalkyl groups. However, this patent does not teach a method of making broad molecular weight distribution polyolefins.

U.S. Patent No, 4,935,474 disclsoes a method of obtaining polyethylene having a broad molecular weight distribution utilizing a catalyst comprising (a) at least two different metallocene each having different propagation and termination rate constants for ethylene polymerizations and (b) an alumoxane. However, this U.S. Patent does not disclose or suggest a method which employs a single metallocene capable of producing a broad MWD polymer. EP-A-316155 describes the use of a bridged and substituted bis cyclopentadienyl metallocene for use in the polymerization of polypropylene, ethylene can be used as a comonomer, see page 7 line 23. Listed among the possible substituents for the cyclopentadienyl rings are on page 5 and page 6 bridged metallocenes having an isopropyl or a t-butyl substitutent. There is no specific teaching that the metallocene with cyclopentadienyl rings substituted by tertiary and secondary hydrocarbon groups should be used in the polymerization of polyethylene.

EP-A-310734 uses at least two different chiral metallocenes to provide a controlled molecular weight distribution. There is no disclosure that metallocenes with tertiary and secondary alkyl substituents on the cyclopentadienyl rings may be used in the polymedzation of ethylene.

EP-277004 discloses metallocenes with tertiary butyl substituents on the cyclopentadienyl rings for use in ethylene polymerization.

In spite of the methods known in the past for polymerizing broader molecular weight distribution polyolefins, there still exists a need in the art for an improved catalyst system and methods for making high quality polyolefins which also provide control over the boradened molecular weight distribution.

In addition to the need for porviding boarder molecular weight distribution polyolefins, there also exists a need in the art for an improved catalyst and method of making high quality polyolefins having improved tensil strength at low elongation and improved tensil impact strength, while maintaining or improving processability.

## SUMMARY OF THE INVENTION

This invention provides a process for producing polyethylene which comprises

(a) contacting ethylene optionally with an α-olefin having 3 or more carbon atoms, with a catalyst system comprising:

(i) at least one first bis-cyclopentadienyl transition metal metallocene represented by the general formula:

$$(C_5R'_k)_g(C_5R'_k)MQ_{3-g},$$

wherein $(C_5R'_k)$ is a substituted or unsubstituted cyclopentadienyl, M is a Group IVB or VB transition metal, each group R' is H, a hydrocarbon group or a substituted hydrocarbon group with at least one substituent R' on one cyclopentadienyl ring of the catalyst system being a hydrocarbon or substituted hydrocarbon group comprising a secondary or tertiary carbon atom through which it is bonded to the cyclopentadienyl group; other substituents R' in the catalyst system may be hydrogen, one or more of the specified secondary or tertiary carbon containing groups or a hydrocarbyl radical containing from 1 to 20 carbon atoms, a silicon-containing hydrocarbyl radical, or a hydrocarbon radical bonded to two carbon atoms of the ring to form a fused ring system, Q may be a hydrocarbyl radical such as aryl, alkyl, alicyclic, alkenyl, alkylaryl, or arylalkyl having 1-20 carbon atom, hydrocarboxyl radical having 1-20 carbon atoms or halogen and can be the same or different or two Q's may be an alkylidene radical having from 1 to 20 carbon atoms, g is 0, 1 or 2; and k is 5; and another second transition metal metallocene having a cyclopentadienyl ring that is substituted or unsubstituted which is physically or chemically mixed with the transition metal metallocene of component (I), and

(ii) an activator for the metallocene under polymerizing conditions to form the desired polyethylene product.

When the second metallocene has a substituted cyclopentadienyl ring, the substituent may be of the same general description as the substituent of the first metallocene, or it may be different. When it is of the same general description, then the second metallocene is in effect simply an additional first metallocene. The catalyst systems of this present invention includes an activator selected from ionic activators or alumoxane or combinations thereof. The key to the invention is that the defined first metallocene structure includes a substituent which leads to the production of polyolefin product of broadened MWD, for example greater than 4. The optional second metallocene enables further control over the product MWD, since its molecular structure will have a modifying or additive effect to the effect of the defined first metallocene. Adjustment of the molar ratio between the first and second metallocenes permits tailoring of the MWD of the polymer. The final molecular weight distribution will be some value between the highest and the lowest molecular weight distribution that each substituent would produce if used alone.

By practicing the process of the invention, in a preferred embodiment, ethylene is polymerized to produce high molecular weight polyethylenes such as linear low density polyethylene (LLDPE) and high density polyethylene (HDPE) polymers having broadened molecular weight distributions with improved mechanical, physical and/or chemical properties. The polymers produced by this present invention are useful for fabrication into articles by, for example, extrusion, injection molding, thermoforming, rotational molding or film blow molding.

According to one embodiment of the present invention, at least one monomer of an olefin is polymerized, preferably in, but not limited to, a gas-phase reactor, in the presence of a supported catalyst system having at least one transition metal metallocene selected from Group IVB or Group VB of the Periodic Table of Elements. The process of this invention is suitable for use in slurry or solution reactors with an unsupported or a supported catalyst system as well as gas phase reactors. In the preferred embodiment of the present invention, the broadening of the molecular weight distribution and the increase in the tensile impact strength is accomplished where the hydrocarbon substituent on a cyclopentadienyl of the first metallocene is an alkyl having 3 to 20 carbon atoms and having a 2° (secondary) or 3° (tertiary) carbon atom with which it is covalently bonded to the ring.

## BRIEF DESCRIPTION OF THE DRAWINGS

The foregoing objects, features, embodiments, and advantages of the invention will become clearer and more fully understood when the following detailed description is read in conjunction with the accompanying drawings, in which:

FIG. 1 is a $^1H$ NMR (400MHz) trace for $(t\text{-}BuCp)_2ZrCl_2$ showing the methyl protons of the t-butyl at about 1.25 parts per million (ppm) and showing the protons of the Cp ring at about 6.3 ppm.

FIG. 2 is a $^1H$ NMR(400MHz) trace for $(i\text{-}PrCp)_2ZrCl_2$ showing the methyl protons of the i-propyl at about 1.20 ppn, the methine proton of the i-propyl at about 3.1 ppm, and showing the protons of the Cp ring at about 6.2 ppm.

FIG. 3 is a plot of log viscosity vs. log molecular weight for polymers produced by the process of this invention (solid dot) and for conventional polsmers produced by a heterogeneous catalyst of the conventional Ziegler-type catalyst.

FIG. 4 is a plot of tensile impact vs. log molecular weight for polymers produced by the process of this invention (circles) and for conventional polymers produced by a heterogeneous catalyst of the conventional Ziegler-type catalyst (solid dots). The regression lines for the polymers produced by the process of this invention and for the conventional Ziegler-type catalyst type polymers are represented by dots and dashes, respectively.

FIG. 5 is a plot of tensile impact ratio vs. log molecular weight for the polymers produced by the process of this invention.

FIG. 6 is a graph of the solubility distribution and composition distribution of a copolymer (X) having a narrow SDBI and CDBI and copolymer (Y) having a broad SDBI and CDBI.

FIG. 7 is a graph illustrating the correlation between dissolution temperature and composition used to convert the temperature scale to a composition scale.

FIG. 8 is a graph illustrating the method for calculating CDBI.

FIG. 9 is a graph illustrating melt tensile force versus molecular weight for the polymer produced by the process of this present invention.

FIG. 10 is a plot illustrating stress versus elongation for the polymer produced by the process of this present invention.

## DETAILED DESCRIPTION OF THE INVENTION

The catalyst components can be activated by ionic activators or alumoxane or combinations thereof.

Two metallocenes are employed as component (i) of the catalyst system, since this permits good control of polymer product MWD. If the second metallocene, preferably a bis cyclopentadienyl transition metal compound, has at least one cyclopentadienyl ring substituted through a 2° or 3° carbon, then the system contains two "first" metallocenes; if the second metallocene does not have such a substituent then the system comprises a "first" and a "second" metallocene. Either form is referred to as a "mixed" catalyst system. The transition metal of the metallocenes can be the same or different.

The mixed systems contemplated by this present invention may be obtained by physical mixing, chemical mixing or chemical synthesis.

"Physical mixing" refers to physically mixing or blending two or more different types of supported or unsupported catalysts, for example, catalysts having different transition metals and/or different cyclopentadienyl ring substituents. For a mixture comprising supported catalysts, the supported first metallocene is prepared independently from the supported second metallocene, then the two components are "physically" mixed together.

"Chemical mixing" refers to providing a mixture of two or more different types metallocene on a single support. In particular, "chemical mixing" requires the mixing of at least two transition metal metallocenes first before introducing the support. As a result, the metallocene compounds are supported on the same support. This is different from the "physical mixing" where the metallocene components are each supported separately and independently on different supports (although the support materials may in fact be the same).

"Synthesis mixing" refers to the provision of different cyclopentadienyl ring substituents on one transition metal metallocene catalyst component. Thus, "synthesis mixing" describes a metallocene component having at least one cyclopentadienyl ring with at least two different substituents bonded to the at least one cyclopentadienyl ring or a metallocene component having at least two cyclopentadienyl rings where each ring is substituted by a differ t substituent. These forms of components must be carefully synthesized prior to their use and hence the name "synthesis mixing".

The transition metal metallocene components utilized in the process of this present invention may be any of the organometallic coordination compounds obtained as a cyclopentadienyl derivative of the Group IVB and Group VB transition metals. Metallocenes which are useful for preparing an active catalytic complex according to the process of this invention are the mono-, bis and tris cyclopentadienyl metal compounds and most preferably, bis-cyclopentadienyl compounds.

It is essential that the improved catalyst system of the process of the present invention has a metallocene component that comprises at least one first transition metal metallocene wherein at least one cyclopentadienyl ring in the system is substituted with a first hydrocarbon substituent that functions as an MWD broadening substituent. This hydrocarbon substituent has a 2° or 3° carbon atom through which it is covalently bonded to the cyclopentadienyl ring. Preferably the catalyst system also has another metallocene component, which has at least one cyclopentadienyl ring substituted with a second cyclopentadienyl ring substituent different from the first ring substituent of the first metallocene component. Preferred metallocenes are the bis (cyclopentadienyl) Group IVB transition metal compounds wherein at least one of the cyclopentadienyl groups of the catalyst system of the present invention is substituted with a hydrocarbon group by covalent bonding through its 2° or 3° carbon atom.

The metallocenes useful in the process of this invention are those represented by the general formula:

$$(C_5R'k)g(C_5R'k)MQ_{3-g},$$

wherein (C5R'k) is a substituted or unsubstituted cyclopentadienyl, M is a Group IVB or VB transition metal and preferably a Group IVB transition metal, each group R' is H, a hydrocarbon group or a substituted hydrocarbon group with at least one substituent R' on one cyclopentadienyl ring of the catalyst system being a hydrocarbon or substituted hydrocarbon group comprising a 2° or 3° carbon atom through which it is bonded to the cyclopentadienyl group; other substituents R' in the catalyst system may be hydrogen, one or more of the specified 2° or 3° carbon containing groups, or a hydrocarbyl radical such as alkyl, alicyclic, aryl, alkylaryl, or arylalkyl radicals containing from 1 to 20 carbon atoms, a silicon-containing hydrocarbyl radical, or a hydrocarbon radical bonded to two carbon atoms of the ring to form a fused ring system, for example the cyclopentadienyl ring and a $C_4$-$C_6$ ring such as indenyl, as indenyl, Q may be a hydrocarbyl radical such as aryl, alkyl, alicyclic, alkenyl, alkylaryl, or arylalkyl having 1-20 carbon atoms, hydrocarboxyl radical having 1-20 carbon atoms or halogen and can be the same or different or two Q's may be an alkylidene radical having from 1 to about 20 carbon atoms. In formula (I) g is 0, 1 or 2 and k is 5.

Exemplary hydrocarbyl radicals are methyl, ethyl, propyl, butyl, amyl, isoamyl, hexyl, cyclohexyl, isobutyl, heptyl, octyl, nonyl, decyl, cetyl, ethylhexyl, phenyl, and the like. Exemplary alkylene radicals are methylene, ethylene, propylene, and the like. Exemplary halogen atoms include chlorine, bromine and iodine and of these halogen atoms, chlorine is preferred. Exemplary alkylidene radicals are methylidene, ethylidene and propylidene.

of the matallocenes, hafnocenes, zirconocenes and titanocenes are most preferred.

Examples of suitable preferred catalyst systems comprising bis(cyclopentadienyl) Group IVB transition metal compounds wherein at least one of the cyclopentadienyl rings of the system has a substituent hydrocarbon or substituted hydrocarbon group covalently bonded to the ring through a 2° or 3° carbon atom, are represented by the following general formulas:

III. $(A\text{-}Cp)MX_1X_2$

IV. $(A\text{-}CP)MX'_1X'_2$

V. (A-Cp)MJ

VI. $(Cp^*)(CpR)MX_1$

wherein "Cp" represents a cyclopentadienyl radical which may be substituted or unsubstituted, and:

(A-Cp) is (Cp) (Cp*) and Cp and Cp* are the same or different cyclopentadienyl ring substituted with from one to five substituent groups R, with at least one substituent R group in the catalyst system being a molecular weight distribution broadening or tensile impact strength enhancing substituent comprising a 2° or 3° carbon atom with which it is bonded to the cyclopentadienyl group. Preferably the metallocene has at least one second substituent R group which is not hydrogen and is different from the first substituent R group, with the second substituent R group and each remainder group R being independently, a radical which can be hydrocarbyl, halocarbyl, substituted halocarbyl, hydrocarbyl-substituted organometalloid, or halogen, or Cp and Cp* are a cyclopentadienyl ring, with at least one group R on the metallocene compound being a molecular weight distribution broadening or tensile impact strength enhancing substituent comprising a 2° or 3° carbon atom with which it is bonded to the cyclopentadienyl ring, with a second substituent R group being different than the first substituent R group, and in which two of the remainder adjacent R groups are joined forming a $C_4$ to $C_{20}$ ring to give a saturated or unsaturated polycyclic cyclopentadienyl ligand such as indenyl, tetrahydroindenyl, fluorenyl, or octahydrofluorenyl and A' is a covalent bridging group which restricts rotation of the two Cp-groups, M is titanium, zirconium or hafnium; J is an olefin, diolefin or aryne ligand; $X_1$ and $X_2$ are, independently, selected from the group consisting of hydride radicals, hydrocarbyl radicals having from 1 to 20 carbon atoms, substituted-hydrocarbyl radicals having from 1 to 20 carbon atoms, wherein one or more of the hydrogen atoms are replaced with a halogen atom, organometalloid radicals comprising a Group IV-A element wherein each of the hydrocarbyl substitutions contained in the organic portion of said organometalloid, independently, contain from 1 to 20 carbon atoms; $X'_1$ and $X'_2$ are joined and bound to the metal atom to form a metallacycle, in which the metal atom, X'1, and $X'_2$ form a hydrocarbocyclic ring containing from about 3 to 20 carbon atoms; and R is a substituent, preferably a hydrocarbyl substituent, on one of the cyclopentadienyl radicals which is also bound to the metal atom.

Each carbon atom in the cyclopentadienyl radical ("Cp") may be, independently, unsubstituted or substituted with the same or a different radical selected from the group consisting of hydrocarbyl radicals, substituted-hydrocarbyl radicals wherein one or more hydrogen atoms is replaced by a halogen atom, hydrocarbyl radicals in which adjacent substituents are joined to form a ring of 4 to 10 or more carbon atoms, hydrocarbyl-substituted metalloid radicals wherein the metalloid is selected from Group IVA or VA of the Periodic Table of the Elements, and halogen radicals. Suitable hydrocarbyl and substituted-hydrocarbyl radicals, which may be substituted for at least one hydrogen atom in a cyclopentadienyl radical, contain from 1 to about 20 carbon atoms and include straight and branched alkyl radicals, cyclic hydrocarbon radicals, alkyl-substituted cyclic hydrocarbon radicals, aryl substituted radicals and alkyl aryl-substituted radicals. Similarly, and when $X_1$ and/or $X_2$ is a hydrocarbyl or substituted-hydrocarbyl radical, each may, independently, contain from 1 to 20 carbon atoms and be a straight or branched alkyl radical, a cyclic hydrocarbyl radical, an alkyl-substituted cyclohydrocarbyl radical, an aryl radical or an alkyl-substituted radical. Suitable organometalloid radicals include mono-, di- and tri- substituted organometalloid radicals of Group IVA or VA elements wherein each of the hydrocarbyl groups contain from 1 to 20 carbon atoms. More particularly, suitable organometalloid radicals include trimethylsilyl, triethylsilyl, ethyldimethylsilyl, methyldiethylsilyl, triphenylgermyl and trimethylgermyl.

Hydrocarbon substituents suitable as the molecular weight distribution broadening substituent of the first metallocene "defined substituent" are generally any optionally substituted hydrocarbon having from 3 to 20 carbon atoms that comprises a 2° or 3° carbon atom through which the group is covalently bonded to the cyclopentadienyl ring. Suitable hydrocarbons include, for example, alkyl, alkenyl, aryl, alicyclic alkylaryl, or arylalkyl groups. The designation "2° or 3° carbon atom" refers to the classification of the carbon atom if the substituent were a carbonium ion not bonded to the cyclopentadienyl carbon atom. of course once the substituent is covalently bonded to the cyclopentadienyl group, the classification of the carbon atom changes (increases in degree), however, the designation "2° or 3° carbon atom" is still utilized and refers to the substituent in its carbonium ion state and not its covalently bonded state. Preferably, the defined substituent is an alkyl having from 3 to 20 carbon atoms, more preferably 3 to 10 carbon atoms still more preferably, 3 to 7 carbon atoms , and most preferably 3 to 5 carbon atoms. and comprising a 2° or 3° carbon atom with which it is covalently bonded to the cyclopentadienyl ring. Exemplary defined substituents include tertiary butyl, isopropyl, and 2° pentyl substituents. The tertiary butyl group comprises a 3° carbon atom at the 2nd position, and the isopropyl group comprises a 2° carbon atom at the 2nd position, through which they are respectively bonded to the cyclopentadienyl ring of the metallocene component. The term "2° pentyl substituent" is herein intended to mean a pentyl group covalently bonded, or able to be bonded at any of the three middle carbons of the n-pentyl group. Preferably, the carbon atom at the 3rd position is used to connect the n-pentyl group to the cyclopentadienyl ring.

The presence of a first metallocene in which at least one cyclopentadienyl ring carries the defined substituent has been found to confer on the polymerization process the ability to produce polymer e.g. polyethylene or ethylene copolymers which have broader MWD than polymers produced using a metallocene not having the defined substituent. This recognition is surprising, and permits control of polymer properties by selection of the defined substituent on the first metallocene. Further control is enabled by selection of other cyclopentadienyl ring substituents on the first metallocene; by the presence of a second metallocene; and by selection of the substituent types on the substituted ring(s) of the second metallocene. Methods of substituting hydrocarbon substituents onto a cyclopentadienyl ring of a metallocene are well known, and any suitable method may be utilized. Such methods include that of Wailes, et al., *"Organometallic Chemistry of Titanium, Zirconium and Hafnium"* (1974).

Generally, such methods involve a salt of the cyclopentadienyl compound, such as a lithium or sodium salt, that is reacted with a halogen substituted substituent. The halogen is removed from the carbon atom of the substituent by lithium or sodium and this carbon atom then covalently bonds to the cyclopentadienyl ring. For the present invention, this means that the halogen is substituted on the 2° or 3° carbon atom. In the reaction, the halogen forms a salt with the lithium or sodium, and the substituent is substituted onto the cyclopentadienyl ring connected by the 2° or 3° carbon atom. The substituted cyclopentadienyl is then recovered from the reaction mixture.

The process according to the invention comprises an activator component (ii) for the first metallocene component (i). Any activator which makes the first metallocene active for olefin polymerization may be used, for example a trialkyl aluminum. Preferably the activator is an alumoxane or one of the class of ionic activators which in combination with the metallocene form a non-coordinating anion system. The catalyst system may be homogeneous or supported.

While not wishing to be bound by theory, alumoxanes are oligomeric aluminum compounds represented by the general formula -(R-Al-O)y, which may be a cyclic compound and $R(R\text{-}Al\text{-}O\text{-})yAlR_2$, which may be a linear compound. In the general formula, "R" is a $C_1$-$C_{10}$ alkyl group such as, for example, methyl, ethyl, propyl, butyl, or pentyl and "y" is an integer from 2 to 50 and represents the degree of oligomerization in the alumoxane. Preferably, R is methyl, and the degree of oligomerization; "y," is preferably 4 to 25 and most preferably 6-25. In the preparation of alumoxanes by reacting methyl aluminum and water, it is believed that a mixture of linear and cyclic compounds is obtained. Generally, an alumoxane having a higher degree of oligomerization will, for a given metallocene, produce a catalyst complex of a higher activity than will an alumoxane having a lower degree of oligomerization. Hence, one procedure by which alumoxane is produced, by direct reaction of an alkyl aluminum with an undehydrated silica gel, should ensure the conversion of a bulk quantity of the alkyl aluminum to an alumoxane that has a high degree of oligomerization. The combination of alkyl aluminum with water, or in some cases, hydroxyl groups, as supplied by alcohol, hydrated materials or bases, results in a mixture, alumoxane, which will be effective in the practice of this invention.

Ionic activator compounds which may be used as activator for the catalyst system employed in the process of the invention are described in EP-A-0277003 and EP-A-0277004 published on August 3, 1988. The compound comprises a cation and an anion, the cation being one which is reactable with a non-cyclopentadienyl ligand of the metallocene to yield as the reaction product a neutral ligand derivative, and a cationic metallocene species to which the anion of the activator compound is essentially non-coordinating. The cationic metallocene as associated with the non-coordinating anion is the catalytically active species of the system. The activator compound may be, for example, a cation and an anionic carborane, or the ion-exchange activator compound is comprised cf a cation and an anionic coordination complex. The cation of the ion-exchange reagents can in general be any cationic species which is capable of reacting with a negatively charged ligand on the first transition metal metallocene. When the ligand on the transition metal precursor is an alkyl, then cations known to abstract alkyls from early transition metal complexes can be used such as triphenylcarbonium, oxonium, silver (I), anilinium and ammonium. The system is best described as a metallocene cation and a bulky, noncoordinating anion which is a salt of Bronsted acids containing a non-coordinating compatible anion. The compatible non-coordinating anion means an anion which functions as a charge balancing anion in a catalyst system and does not transfer an anionic substituent or fragment thereof to any cationic species thereby forming a neutral Group IVB and VB or Lanthanide metal product. Compatible anions are anions which are not degraded to neutrality during catalyst preparation or use, A preferred ion-exchange activators are comprised of an acidic ammonium cation and an anionic coordination complex derived from boron having the general formula $[LH]^+[BArAr'XX']$ wherein $[LH]^+$is a protonated tertiary amine, L is a tertiary amine, Ar, Ar', X, X' are aromatic hydrocarbyl radicals, preferably halogenated e.g. fluorinated, and X and X' may be hydride, halide or hydrocarbyl radicals e.g. aromatic hydrocarbyl radicals, preferably halogenated e.g. fluorinated. The chemical structure of the catalytically active species is dependent upon the nature of the cation employed in the activator compound and upon the stoichiometric proportions in which the metallocene and activator compound are reacted. In some instances, the metallocene cation generated by the reaction exists as a three coordinate species, $ACpZX_1$+ (where ACp represents two cyclopentadienyl ligands which are unbridged, the same or different, Z is a Group IVB metal, and $X_1$ is selected from the group consisting of hydride, aryl, hydrocarbyl, halocarbyl, or organic derivatives of organometalloid radicals), although it is possible that the four coordinate species $ACpZX_1$(L)+ (where L is a neutral Lewis base such as tertiary amine or metallocene) can form via the labile coordination thereto of the neutral Lewis base by-product or via a dimeric coordination to a neutral as yet unreacted metallocene. In both forms the metallocene cation is stabilized by ionic association to the non-coordinating anion provided by the activator compound while the neutral coordination ligand, either the neutral Lewis base by-product or a neutral metallocene dimerizing ligand are very labile to displacement by an olefin or other polymerizable monomer.

The catalyst systems as described above are very active for the production of polyolefins without the need to employ quantities of activator compounds much in excess of a stoichiometric ratio to the metallocene of 1:1.

When an alumoxane is employed as activator for the inventive process, the metallocene-alumoxane catalyst system may be prepared, for example, by any of the methods well known in the prior art, for example, as taught in U. S. Pat. No. 4,701,432, 4,808,561, 4,912,075, 4,925,821 and 5,008,228. Such methods include preparing the alumoxane component of the active catalyst complex separately then adding it to a catalyst support material which is then treated with a metallocene to form an active catalyst complex. The alumoxane may be prepared by contacting water in the form of a moist solvent with a solution of aluminum trialkyl in a suitable organic solvent such as benzene, other aromatics, or aliphatic hydrocarbons.

Another method for preparing the metallocene-alumoxane catalyst system involves contacting the aluminum alkyl with the metallocene followed by the addition of wet silica. In another method, an aluminum alkyl is contacted with a hydrated salt, such as hydrated copper sulfate.

When a supported metallocene-alumoxane catalyst system is employed in the present invention, this is preferably prepared by direct reaction of an aluminum trialkyl with the material utilized as the catalyst support, e.g. a "wet" silica gel, which may be undehydrated silica gel and/or water impregnated silica gel.

Undehydrated or water impregnated silica gel especially useful as the catalyst support is that which has a minimum surface area of 10, 100 or 200 $m^2/g$ and a maximum surface area of 400, 500 or 700 $m^2/g$. The silica preferably has a pore volume of 3 to 0.5 ml/g, more preferably 2-1 ml/g, and an adsorbed water content of from 0.5 to 10 weight percent. The particle size of the silica is preferably from 10 μm to 100 μm, and more preferably from 30 μm to 60 μm.

The water impregnated gel preferably has an adsorbed water content of from 10 to 50 weight percent, with the upper range more preferably 35 or 40, and a lover range more preferably 20 or 35. The particle size of the silica is preferably in the upper range of from 10 μm or 30 μm to 60 μm or 100 μm.

Water-impregnated silica gel may be formed by adding sufficient water to commercially available silica gel (Davison 948) to create an aqueous slurry. Because silica gel possesses many fine pores, it is extremely adsorbent and will rapidly become saturated. Once the aqueous slurry is formed, excess water can be removed by filtration, followed by air drying, or only air drying, to a free flowing powder state. Drying at elevated temperatures is not recommended because it could substantially decrease the amount of adsorbed water.

In one method of forming the supported catalyst, undehydrated or water impregnated silica gel is slowly added over time, to a stirred solution of aluminum trialkyl, preferably trimethyl aluminum or triethyl aluminum, in an amount sufficient to provide a mole ratio of aluminum trialkyl to water of from 3:1 or 2:1 to 1:2 or 0.9:1. Also suitable for use as the aluminum trialkyl are tripropyl aluminum, tri-n-butyl aluminum, tri-isobutyl aluminum, tri(2-methylpentyl) aluminum, trihexyl aluminum, tri-n-octyl aluminum, and tri-n-decyl aluminum. The solvents are preferably inert hydrocarbons, in particular a hydrocarbon that is inert with respect to the catalyst system. Such solvents are well known and include, for example, isobutane, butane, pentane, hexane, isohexane, heptane, octane, cyclohexane, methylcyclohexane, toluene and xylene.

Upon addition of the wet silica gel to the solution of aluminum trialkyl, the water content of the silica gel controllably reacts with the aluminum trialkyl to produce an alumoxane which is deposited onto the surface of the silica gel particles. The reaction of the aluminum trialkyl with the water content of the silica gel proceeds relatively quickly but not explosively. The reaction may be safely conducted in conventional mixing equipment under a mantle of inert gas.

Once the alumoxane-silica component has been formed, a metallocene may be added to the slurried suspension of alumoxane-silica gel product to form the metallocene-alumoxane catalyst, or the alumoxane silica component may be additionally processed to further enhance the ultimate catalytic activity of the formed catalyst.

Further processing would comprise drying the slurried suspension to remove the excess liquid, preferably drying the alumoxane-silica component to a powder, followed by reslurrying the alumoxane-silica component with a hydrocarbon solvent that is inert with respect to the alumoxane-silica component, such as for example isobutane, butane, isopentane, pentane, isohexane, hexane, heptane, octane, cyclohexane, methylcyclohexane, toluene and xylene.

Once the suspension of alumoxane-silica gel is formed, either initially, or after reslurrying with the additional processing, a metallocene is added to the suspension of alumoxane silica gel product in an amount sufficient to provide a mole ratio of aluminum to transition metal which is preferably from 1000:1 to 1:1, preferably from 300:1 to 10:1 and especially from 150:1 to 30:1. The mixture is stirred for about 30 minutes to about one hour at ambient or an elevated temperature of about 75°C to permit the metallocene to undergo complete complexing reaction with the adsorbed alumoxane. Thereafter, the solvent is removed and the residual solids are dried, preferably at a temperature of 75°C or greater, to a free flowing powder. The free flowing powder comprises a silica gel supported metallocene alumoxane catalyst complex of sufficiently high catalytic activity for use in the gas phase polymerization of olefins by conventional gas phase polymerization procedures. By appropriate selection of the type and relative amounts of the metallocene and the aluminum trialkyl cocatalyst precursor, one can attain by the present method the particular active catalyst complex desired for any particular application. For example, higher concentrations of alumoxane in the catalyst system generally result in higher molecular weight polymer product. For most applications the ratio of aluminum in the aluminum alkyl to total metal in the transition metal metallocene can be in the range of from 1500:1, 1000:1 or 250:1,to1:1500 to 1:1,or 5:1.

Following the addition of the metallocene to the alumoxane adsorbed on the silica gel solids, the solvent is removed by filtering or evaporation, and the residual solids are dried to a free flowing powder. Drying of the residual solids may be conducted at a temperature up to 85°C, and preferably at a temperature of 75°C. The dried free flowing powder comprises a metallocene alumoxane complex adsorbed upon the surface of the silica gel support particles. The dried state composition exhibits a level of catalytic activity useful for gas phase polymerization of olefins.

The monomers that may be copolymerized with ethylene in the process of the present invention are selected from among cyclic or acyclic olefins and cyclic or acyclic polyenes. Suitable alpha-olefins include those such as propylene, butene, pentene, hexene, heptene, octene,1-butene, 1-pentene, 1-hexene and 1-octane, 1-decene, 1-dodecene, 1-tetradecene, 1-hexadecene, 1-octadecene, 1-eicosene, and 4-methyl-1-pentene. Ethylene is polymerized either alone or with at least one alpha-olefin having 3 or more carbon atoms.

In addition, the present invention may be utilized for the copolymerization with a polyene, e.g. a polyene having from 3 to 20 carbon atoms. Preferably, the polyene has from 4 to 20 carbon atoms, more preferably from 4 to 15 carbon atoms. Preferably, the polyene is a diene with a double bond in the alpha position and generally has from 3 to 20 carbon atoms, such as, a straight chain, branched chain or cyclic hydrocarbon diene preferably having from 4 to 20 carbon atoms, and more preferably from 4 to 15 carbon atoms, and most preferably from 6 to 15 carbon atoms. Most preferably, the diene is a non conjugated diene. Examples of suitable dienes are straight chain acyclic dienes such as: 1,3-butadiene, 1,4-pentadiene, 1,4-hexadiene, 1,6-octadiene, 1,7-octadiene, 1,8-nonadiene and 1,9-decadiene; branched chain acyclic dienes such as: 5-methyl-1,4-hexadiene, 3,7-dimethyl-1,6-octadiene, 3,7-dimethyl-1,7-octadiene and mixed isomers of dihydromyricene and dihydroocinene; single ring alicyclic dienes such as: 1,3-cyclopentadiene, 1,4-cylcohexadiene, 1,5-cyclooctadiene and 1,5-cyclododecadiene; and multi-ring alicyclic fused and bridged ring dienes such as: tetrahydroindene, methyl tetrahydroindene, dicyclopentadiene, bicyclo-(2,2,1)-hepta-2-5-diene; alkenyl, alkylidene, cycloalkenyl and cycloalkylidene norbornenes such as 5-methylene-2-norbornene (MKB) , 5-propenyl-2-norbornene, 5-isopropylidene-2-norbornene, 5-(4-cyclopentenyl)-2-norbornene, 5-cyclohexylidene-2-norbornene, 5-vinyl-2-norbornene and norbornene. Of the dienes typically used to prepare EPR's, the particularly preferred dienes are 1,4-hexadiene, 5-ethylidene-2-norbornene, 5-vinylidene-2-norbornene, 5-methylene-2-norbornene and dicyclopentadiene. The especially preferred dienes are 5-ethylidene-2-norbornene and 1,4-hexadiene.

The polymer of the present invention will have a density in the range of from 0.88 to 0.965 g/cm$^3$, preferably in the range of from 0.89 to 0.93 g/cm$^3$.

In the process of the present invention, the polymerization may be conducted by a solution, slurry, or gas-phase technique. Preferred temperatures are from o°C to 200°C, or even higher; atmospheric, subatmospheric, or superatmospheric pressure conditions may be used; and conventional polymerization adjuvants, such as hydrogen may be employed if desired. Preferably, the process of the present invention utilizes gas phase polymerization. It is generally preferred to use the catalyst system at a concentration such as to provide at least 0.000001 percent, more preferably at least 0.00001 percent by weight of transition metal based on the weight of the monomer(s), in the polymerization of ethylene, alone or with one or more higher olefins. The upper limit of the percent by weight of transition metal present is determined by catalytic activity and process economics.

A slurry or solution polymerization process can utilize sub- or superatmospheric pressures and preferably employs temperatures of from 40°C to 110°C. In a slurry polymerization, a suspension of solid, particulate polymer is formed in a liquid polymerization medium to which ethylene, alpha-olefin comonomer, hydrogen and catalyst are added. The liquid employed as the polymerization medium can be an alkane or a cycloalkane, such as butane, pentane, hexane, or cylclohexane, or an aromatic hydrocarbon, such as toluene, ethylbenzene or xylene. The medium employed should be liquid under the conditions of the polymerization and relatively inert. Preferably, hexane or toluene is employed. In one embodiment, ethylene, alpha-olefin comonomer, hydrogen and catalyst are added to the liquid medium and conditions adjusted to polymerize the monomers.

A preferred gas phase polymerization process of the invention utilizes superatmospheric pressure and temperatures in the range of from 50°C to 120°C. Gas phase polymerization can be performed in a stirred or fluidized bed of catalyst and product particles in a pressure vessel adapted to permit the separation of product particles from unreacted gases. To produce polyethylene, thermostated ethylene, optional comonomer, optional hydrogen and an inert diluent gas such as nitrogen can be introduced or recirculated so as to maintain the particles at a temperature of 50°C to 120°C. Triethylaluminum may be added as needed as a scavenger of water, oxygen, and other adventitious impurities. Polymer product can be withdrawn continuously or semi-continuously at a rate such as to maintain a constant product inventory in the reactor. After polymerization and deactivation of the catalyst, the product polymer can be recovered by any suitable means. In commercial practice, the polymer product can be recovered directly from the gas phase reactor. Residual monomer can be removed with a nitrogen purge, and used without further deactivation or catalyst removal.

Molecular weight distribution (MWD), polydispersity, or (Mw/Mn) are generally synonymous and are useful indicators of processability as well as indicators of molecular structure. Generally as MWD increases, the processability of the polymer increases. Also, generally as MWD increases some of the polymer characteristics will degrade, conversely as MWD decreases, generally, some polymer properties e.g. strength, will improve, while the processability will decrease.

These general trends may be altered in some cases such as, for example, the instances in which the MWD is multi-modal as described in U.S. Pat. No 4,530,914 to Ewen, et al. Since MWD is essentially an average over a range, a polymer displaying a multi-modal distribution may offer a high molecular weight, good processability, and yet still retain good strength in the resulting polymer. For these reasons, it is likely that polymers having upper limits in the higher ranges of MWD, such as, for example, above 3, preferably in the range of above 3 to 100 and higher, when obtained by the practice of this invention, may have useful properties as well as being easy to process.

In accordance with, the process of the present invention, polymer is obtained with a broadened molecular weight distribution *as* compared to polymer obtained utilizing known catalysts at same or similar polymerization conditions. Generally the polymer will have a molecular weight distribution greater than 4, preferably greater than 5, more preferably greater than 6, and most preferably greater than 7.

Also, in accordance with the process of the present invention the polymer product preferably has a high molecular weight, weight average molecular weight (Mw) of greater than 50,000, preferably in the range of 60,000 to 200,000 and even more preferably between 80,000 to 180,000.

The polymer obtained in the present process can be extruded into water and cut into pellets or other suitable comminuted shapes. Pigments, antioxidants, fillers, stabilizers, processing aids, and other additives, as are known in the art, may be added to the polymer.

According to the process of the present invention, the molecular weight distribution of the polymer produced may be controlled by selecting the types of substituents on the cyclopentadienyl rings of the catalyst system. The molecular weight distribution of the polymer formed by the present invention using an embodiment of the catalyst system which has two or more substituents on the cyclopentadienyl rings of the system will depend upon the molecular weight distribution that such substituents would produce if utilized alone. When catalysts with different substituents are used to produce polymers, the molecular weight distribution of those polymers will be a function of the molecular weight distributions produced with each substituent by itself. By varying the ratio of the weight-average molecular weights of the two fractions the MWD of the bi-substituent product can range from less than 4 to greater than 11.

Control can be established by varying the ratio of the first hydrocarbon substituent to the second hydrocarbon substituent in the catalyst system. With multiple hydrocarbon substituents on the cyclopentadienyl rings of the catalyst system, the resulting polymer will have a molecular weight distribution somewhere between the highest and lowest molecular weight distribution value for the substituents were they used alone.

Also in accordance with the process of the present invention, polymer is obtained having improved impact strength as compared to polymer obtained utilizing prior art catalysts at the same or similar polymerization conditions. For melt indexes less than 5 dg/min, densities less than 0.93 g/cm$^3$ and with about the same comonomer and comonomer content, polymers produced by the present invention generally have at least 200% the tensile impact strength of polymers produced utilizing conventional Ziegler-type catalysts. Preferably, the tensile impact strength is at least 250%, most preferably at least 300% greater. As the melt index (MI) increases, this improved impact strength phenomenon tends to be diminished, and in fact will converge at high melt indexes and densities. The polymers produced by the process of the present invention will generally have a MI of at least 0.5 ranging up to that MI at which the impact strength is diminished. Typically the range may be from 0.5 to 10. For film applications the MI is preferably in the range of from 0.5 to 3.5, and for molding applications the MI is preferably in the range of from 5 up to that MI at which the impact strength is diminished.

The polymers obtained in the present process have significantly higher melt strength than products produced with conventional Ziegler-Natta catalysts or with metallocene catalysts which produce narrow MWD products as can be seen from Table VII. Further, the polymer product produced by this present invention has a high film tensile force at low elongation as is illustrated in Figure 9. Also, the polymer obtained in the present process can be extruded into water and cut into pellets or other suitable comminuted shapes. Pigments, antioxidants, fillers, stabilizers, processing aids, and other additives, as are known in the art, may be added to the polymer.

The polymers produced by the process of the present invention are capable of being fabricated into a wide variety of articles, as is known for homopolymers of ethylene and copolymers of ethylene and higher alpha-olefins, including films and molded articles.

The compositional distribution breadth index (CDBI) for the polymers produced by the process of the present invention is generally from 30 to 95 percent. For polymers produced utilizing a high pressure process the CDBI is generally from 70 to 95 percent, preferably 75 to 95 percent, and most preferably from 80 to 95 percent. For polymers produced utilizing a gas phase process the CDBI is generally from 50 to 75 percent, preferably from 55 to 75 percent, and most preferably from 65 to 75 percent.

The CDBI and homopolymer content are both determined by the Temperature Rising Elution Fractionation (TREF) technique described in U.S. Patent No. 5,008,204 and Wild, et al., J. Poly. Sci. Ed., Vol. 20, p. 441, (1982). The solvent was tetrachloroethylene, the temperature range was 0°C to 120°C. The CDBI is defined as the weight percent of polymer molecules having a comonomer content within the median molar comonomer content ±25%. High CDBIs correspond to narrow short chain branching (SCB) distributions. The homopolymer content, i.e. portion containing no SCBs, is the weight percent eluting above 85°C column temperature, the temperature above which no SCBs are detected.

Solubility Distribution is measured using a column of length 164 cm and 1.8 cm ID (inner diameter) which is packed with non-porous glass beads (20-30 mesh) and immersed in a temperature programmable oil bath. The bath is stirred very vigorously to minimize temperature gradients within the bath, and the bath temperature is measured using a platinum resistance thermometer. About 1.6 g of polymer is placed in a sample preparation chamber and repeatedly evacuated and filled with nitrogen to remove oxygen from the system. A metered volume of tetrachlorethylene solvent is then pumped into the sample preparation chamber, where it is stirred and heated under 3 atmospheres pressure at 140°C to obtain a polymer solution of about 1 percent concentration. A metered volume of this solution, 100 $cm^3$ is then pumped into the packed column thermostated at a high temperature, 120°C.

The polymer solution in the column is subsequently crystallized by cooling the column to 0°C at a cooling rate of ~20°C/min. The column temperature is then maintained at this temperature for 25 min. at 0°C. The elution stage is then begun by pumping pure solvent, preheated to the temperature of the oil bath, through the column at a flow rate of 27 $cm^3$/min. Effluent from the column passes through a heated line to an IR detector which is used to measure the absorbance of the effluent stream. The absorbance of the polymer carbon-hydrogen stretching bands at about 2960 $cm^{-1}$ serves as a continuous measure of the relative weight percent concentration of polymer in the effluent. After passing through the infrared detector the temperature of the effluent is reduced to about 110°C, and the pressure is reduced to atmospheric pressure before passing the effluent stream into an automatic fraction collector. Fractions are collected in 3°C intervals. In the elution stage pure tetrachlorethylene solvent is pumped through the column at 0°C at 27 $cm^3$/min. for 25 min. This flushes polymer that has not crystallized during the cooling stage out of the column so that the percent of uncrystallized polymer (i.e. the percent of polymer soluble at 0°C) can be determined from the infrared trace. The temperature is then programmed upward at a rate of 1.0°C/min. to 120°C. A solubility distribution curve, i.e. a plot of weight fraction of polymer solubilized as a function of temperature, is thus obtained.

The procedure for calculating the Solubility Distribution Breadth Index (SDBI) is set forth below.

Solubility distributions of two ethylene interpolymers are shown in FIG. 6. Here, for illustration purposes only, Sample X has a narrow solubility distribution and elutes over a narrow temperature range compared to Sample Y, which has a broad solubility distribution. A solubility distribution breadth index (SDBI) is used as a measure of the breadth of the solubility distribution curve. Let w(T) be the weight fraction of polymer eluting (dissolving) at temperature T. The average dissolution temperature, T ave, is given by

$$T_{ave} = \int T\ w(T)dT, \text{ where } \int w(T)dT = 1.$$

SDBI is calculated using the relation:

$$SDBI(^\circ C) = [(T - T_{ave})^4 w(T)dT]^{1/4}$$

(SDBI is thus analogous to the standard deviation of the solubility distribution curve, but it involves the fourth power rather than the second power to T - Tave). Thus, for example, the narrow solubility distribution Sample X and the broad solubility distribution Sample Y in FIG. 6 have SDBI values equal to 14.6°C and 29.4°C, respectively. The preferred values of SDBI are less than 28°C and more preferred less than 25°C and even more preferred less than 20°C.

The composition distribution (CD) of a crystalline interpolymer is determined as follows. The composition and number average molecular weight, $M_n$, of fractions collected in various narrow temperature intervals for several poly (ethylene-co-butene)'s was determined by C13 NMR and size exclusion chromatography, respectively. FIG. 7 is a plot of mole percent comonomer vs. elution temperature for fractions having $M_n$ > 15,000. The curve drawn through the data points is used to correlate composition with elution temperature for temperatures greater than 0°C. The correlation between elution temperature and composition becomes less accurate as the $M_n$ of a fraction decreases below 15,000. Such errors can be eliminated by direct measurement of the composition of effluent fractions by C13 NMR. Alternatively, the elution temperature-composition calibration for high molecular weight fractions given in Figure 7 may be corrected based on the Mn of effluent fractions and an experimentally established correlation between $M_n$ and elution temperature that applies for $M_n$ < 15,000. However, it is assumed that such low molecular weight molecules are present to a negligible extent and that any errors caused are negligible. A correlation curve such as the one in FIG. 7 is applicable to any essentially random poly(ethylene-co-$\alpha$-olefin) provided, however, that the $\alpha$-olefin is not propylene.

The temperature scale of a solubility distribution plot can thus be transformed to a composition scale, yielding a weight fraction of polymer versus composition curve. As seen from the composition scale in FIG. 7, Sample X contains molecules spanning a narrow composition range, whereas Sample Y contains molecules spanning a wide composition range. Thus, Sample X has a narrow composition distribution whereas Sample Y has a broad composition distribution.

A quantitative measure of the breadth of the composition distribution is provided by the Composition Distribution Breadth Index (CDBI). CDBI is defined to be the percent of polymer whose composition is within 50% of the median comonomer composition. It is calculated from the composition distribution curve and the normalized cumulative integral of the composition distribution curve, as illustrated in FIG. 8. The median composition, Cmed, corresponds to the composition at the point where the cumulative integral equals 0.5. The difference between the values of the cumulative integral at compositions 0.5 Cmed and 1.5 Cmed (71 - 29, or 42%, in this example) is the CDBI of the copolymer. CDBI values fall between zero and one, with large values indicating narrow CD and low values indicating broad CD. Thus, now referring back to Figure 6, the narrow and broad CD copolymers have CDBI's equal to 95.5% and 42%, respectively. It is difficult to measure the CD and CDBI of copolymers having very low comanomer content with high accuracy so the CDBI of polyethylenes with densities greater than 0.94 g/$cm^3$ is defined to be equal to 100%.

Unless otherwise indicated, terms such as "comonomer content", "average comonomer content" and the like refer to the bulk comonomer content of the indicated interpolymer blend, blend component or fraction on a molar basis.

Hexane extractables is determined with a Soxhlet extractor on samples milled to 20-mesh. Each sample is weighed, extracted with hexane at reflux conditions for one hour, rinsed for two hours, dried and reweighed. Weight percent hexane extractables is calculated from weight loss. Hexane extractables captures not only low molecular weight content, but also material with high SCB frequencies, regardless of molecular weight.

Molecular weight profiles were detemined using Size Exclusion Chromatography. The included data was obtained at 145°C with a Waters SEC using Ultrastyrogel columns and a refractive index detector. The solvent was trichlorobenzene; the calibration standards were polystyrene. The key statistics are number-average molecular weight (Mn), weight-average molecular .weight (Mw), Z-average molecular weight (Mz), polydispersity index (Mw/Mn), and the Mz/Mw ratio.

Viscosity was measured with an Instron Capillary Rheometer at 190°C at ten different shear rates ranging from 13.7 $s^{-1}$ to 13.7K $s^{-1}$. Viscosity was measured to reflect processability parameters such as extruder power draw and head pressure. The first point of discontinuity as shear rate increases in the shear stress vs. shear rate curve is assumed to be the onset of surface melt fracture, another key processability parameter for linear polyethylenes.

Tensile impact was measured according to ASTM D-1822.

<u>Example 1 - PREPARATION OF HETALLOCENE</u>

Bis ($\eta^5$-n-propylcyclopentadienyl) zirconium (IV) dichloride {(*n*-PrCp)$_2$ZrCl$_2$}; bis ($\eta^5$-*i*-propycyclopentadienyl) zirconium (IV) dichloride {(*i*-PrCp)$_2$ZrCl$_2$}; bis ($\eta^5$-*i*-butylcyclopentadienyl (zirconium (IV) dichloride {(*i*-BuCp)$_2$ZrCl$_2$}; bis($\eta^5$-*3*-pentylcyclopentadienyl)(zirconium (IV) dichloride (3-PentCp)$_2$ZrCl$_2$) and bis ($\eta^5$-*t*-butylcyclopentadienyl) zirconium (IV) dichloride {*t*-BuCp)$_2$ZrCl$_2$} were prepared using similar procedures. For example, (*t*-BuCp)$_2$ZrCl$_2$ was prepared according to the following methods:

A 2-Bromo-2-methyl propane sample(353.5 g, 2.582 mol, Aldrich) was transferred into a 2-1 reaction flask with side-arms at 5°C. Sodium cyclopentadienide (1290 $cm^3$ of a 2.0 M solution in THF, 2.582 mol, Aldrich) was slowly added. After complete addition, the reaction set-up was allowed to warm up to ambient temperature over 12 hours. Distilled water was added to dissolve the resulting sodium bromide and the THF solution was collected over anhydrous sodium sulfate. The aqueous layer was repeatedly extracted with diethyl ether and combined with the THF solution. Filtration afforded the crude 2-cyclopentadienyl-2-methyl propane (*t*-BuCp); the solvent was removed and the crude product was fractionally distilled to obtain the pure (*t*-BuCp), boiling point 125°C. A sample of the pure *t*-BuCp (42.81 g, 0.351 mol) and THF (400 $cm^3$) were transferred into a 1-1 reaction flask equipped with a mechanical stirrer. *n*-Butyl lithium (223 $cm^3$ of a 1.6 M solution in hexanes, 0.357 mol, Aldrich) was added dropwise at ambient temperature. The mixture was vigorously stirred for 3 hours and the resulting solution of t-BuC5H4-Li+ was slowly added to a suspension of ZrCl4 (40.78 g, 0.175 mol) in THF (100 $cm^3$) at -78°C. After complete addition of the lithiated salt, stirring continued and the reaction slowly warmed up to ambient temperature over 12 h. The solvent was stripped off under reduced pressure and the crude product was Soxhlet extracted in toluene to yield crystals, after cooling, of $(t\text{-BuCp})_2ZrCl_2$. Figs. 1 and 2 show the H' NMR traces (400 MHz) for Bis(i-propylcyclopentadienyl) Zirconium Dichloride and Bis(t-butylcyclopentadienyl) Zirconium Dichloride, respectively.

**Example 2 - Preparation of Support Material**

A solution of 10 wt% trimethylaluminum (TMA) in isopentane was sampled into a 3-1 reaction flask equipped with a mechanical stirring device and an addition funnel containing a 200 g portion of a Davison D-948 silica. The silica had 9.7 wt% water content. After complete addition of silica to the TMA solution at -5°C, the resulting suspension was stirred for a further 1 hour at 25°C before removing the isopentane solvent under reduced pressure to give a free-flowing stock support material comprising a methylalumoxane and silica.

**Example 3 - Supported Metallocene Catalysts**

The procedure used for supporting $(n\text{-PrCp})_2ZrCl_2$ and $(t\text{-BuCp})_2ZrCl_2$ are similar; for example, 0.761 g (2.02 mmol) $(n\text{-PrCp})_2ZrCl_2$ was dissolved in a toluene/heptane (1:1, v/v) mixture. This solution was then added slowly over 40 minutes to a slurry of a 30 g portion of the support material prepared in Example 2 in 100 $cm^3$ heptane. The reaction temperature was maintained at 60°C for an additional 1 hour before drying the resulting catalyst to a free-flowing powder. The final catalyst has a loading of 0.6 wt% Zr and Al:Zr molar ratio of 76.

**Examples 4-12: POLYMERIZATION TESTS** (not according to invention)

(a) For each example a sample of metallocene supported by the method of Example 3 on the treated silica support material as described in Example 2 was used for ethylene homopolymerization and ethylene/1-butene copolymerization. In each case a continuous fluid bed gas-phase reactor operated at 300 psig (2.07 MPag) total pressure, 65°C reactor temperature and 0.7 ft/s (21.3 cm/s) cycle gas velocity was used for determining catalyst efficiency and response to co-monomer such as 1-butene. A solution of TEAL (1 wt% in isopentane) was fed into the reactor as a scavenger at a rate of 1 $cm^3$/h. Details of ethylene and 1-butene composition, hydrogen concentration, catalyst addition rate and polymer production rate in the reactor for each Example are included in Table I. Polymer samples were collected and analyzed after three bed turnovers. (Example 11 and 12 are comparative in that no defined "first metallocene" is used which has a 2° or 3° carbon containing substituent. The polymer produced is of considerably narrower MWD than that produced in Examples 4-10.

TABLE I

| Ex | Compound Used | $C_4$ mol% | $H_2$ ppm | Catalyst rate g/h | Polymer rate g/h | MI dg/min | d g/cc | Mw g/mol | MWD |
|---|---|---|---|---|---|---|---|---|---|
| 4 | (tBuCp) 2ZrCl2 | 6.7 | 370 | 0.671 | 112 | 33.4 | 0.917 | 57700 | 8.3 |
| 5 | (tBuCp) 2ZrCl2 | 4.7 | 100 | 1.001 | 210 | 7.9 | 0.933 | 42700 | 5.9 |
| 6 | (tBuCp) 2ZrCl2 | 0 | 310 | 0.921 | 150 | 5.8 | 0.967 | 60600 | 4.9 |
| 7 | (iPrCp) 2ZrCl2 | 6.6 | 300 | 0.158 | 177 | 1.9 | 0.919 | 95500 | 5.6 |
| 8 | (iPrCp) 2ZrCl2 | 6.6 | 300 | 0.225 | 274 | 1.9 | 0.917 | 106500 | 4.5 |
| 9 | (iPrCp) 2ZrCl2 | 6.6 | 0 | 0.233 | 147 | 0.1 | 0.914 | 176300 | 8.8 |

TABLE I (continued)

| Ex | Compound Used | $C_4$ mol% | $H_2$ ppm | Catalyst rate g/h | Polymer rate g/h | MI dg/min | d g/cc | Mw g/mol | MWD |
|---|---|---|---|---|---|---|---|---|---|
| 10 | (3PentCp) 2-ZrCl2 | 4.5 | 200 | 0.156 | 161 | 4.3 | 0.921 | 75270 | 4.2 |
| 11 | (iBuCp) 2ZrCl2 | 6.1 | 300 | 0.501 | 297 | 2.5 | 0.907 | 85000 | 2.6 |
| 12 | (nPrCp) 2ZrCl2 | 6.4 | 380 | 0.361 | 280 | 1.4 | 0.909 | 102800 | 2.8 |

Molecular weight attributes (see Table I) were determined by using a Water's Associates Model 150C gel permeation chromatographic (GPC) instrument. The measurements were obtained by dissolving polymer samples in hot trichlorobenzene (TCB) and filtering. The GPC runs were performed at 145°C in TCB at a flow rate of 1 $cm^3$/min. Styragel columns from Perkin Elmer, Inc. were used. The integration parameters were recorded using a Hewlett-Packard computer.

Comparative Example 13

Preparation of Support

Davison 948 silica (150 g, LOI 9.4%) was slowly added to a 10wt% solution of trimethyl aluminum (TMA) in isopentane (1077 $cm^3$). The reaction temperature during silica addition was kept at -5°C. After complete addition of the silica, the temperature was raised to 30°C and held for 1 hour. The solvent was then removed under reduced pressure until a free-flowing powder was obtained. This was saved and used as stock of support material comprising a methylalumoxane on silica. supporting $(n\text{-}PrCp)_2ZrCl_2$ on TMA-treated silica

A sample of the support material so described above (30 g) was suspended in 150 $cm^3$ heptane in a reaction flask equipped with a dropping funnel containing 0.76 grams of $(n\text{-}PrCp)_2ZrCl_2$ in 20 $cm^3$ toluene. The set-up was maintained at 60°C during the addition of the metallocene and held for 1 hour after complete addition of the metallocene. The solvents were then removed under reduced pressure to give a free-flowing powder. This catalyst had 0.6wt% Zr loading.

Polymerization Test

The supported catalyst described above was used in gas-phase polymerization in the following manner and the results are summarized in Table 2 in which Examples 13 and 14 are comparative.

Ethylene was co-polymerized with 1-butene in a fluid-bed reactor at 650C. During the polymerization, monomer feeds, hydrogen concentration and reactor pressure were kept constant. The gas velocity through the reactor was 0.7 ft/s (21.3 cm/s). Catalyst was fed into the reactor at a rate that periodically brings the bed height in the reactor up to a set value for product discharge. Samples were taken and analyzed after at least three bed turnovers to determine the properties of the polymer made.

**Example 14**

**Supporting $(t\text{-}BuCp)_2ZrCl_2$ on TMA-treated silica**

This catalyst was prepared in a manner similar to that described in Example 13. The following quantities were used: 64.27 g of TMA-treated silica was suspended in 200 $cm^3$ heptane at 60°C and 1.69 g of$(t\text{-}BuCp)_2ZrCl_2$ dissolved in 45 $cm^3$ toluene was slowly added to the slurry. Stirring was continued for 1 h after the metallocene solution had been added. The solvents were removed under reduced pressure at 60°C to give a free-flowing powder.

This supported $(t\text{-}BuCp)_2ZrCl_2$ catalyst was then tested for ethylene/1-butene co-polymerization in a manner similar to that used in Example 13.

## Example 15

**Preparation of supported (n-PrCp) (t-BuCp)$ZrCl_2$ catalyst**

In a 500 $cm^3$ reaction flask equipped with a dropping funnel and a mechanical stirrer, n-BuLi (71 $cm^3$ of 1.6 M solution in hexanes) was slowly added to a solution of t-BuCp (13.61 g, 0.112 mol) in THF (130 $cm^3$). The resulting mixture was stirred at ambient temperature for 3 hours and then added slowly to $ZrCl_4$ (26.1 g, 0.112 mol) in 100 $cm^3$ THF at -78°C. The reaction mixture was allowed to slowly warm up to room temperature over 15 hours.
A lithiated salt of nPrCp was prepared in a separate 500 $cm^3$ reaction flask by slowly adding 71 $cm^3$ solution of 1.6M n-BuLi in hexanes to a solution of n-PrCp (12.1 g, 0.112 mol) in 100 $cm^3$ THF. After 3 hours reaction time at ambient temperature, the lithiated nPrCp salt was slowly added to the reaction product of the t-$BuCp^-Li^+$ and $ZrCl_4$ prepared as described above and cooled to -78°C. After complete addition of the n-$PrCp^-Li^+$ salt, the reaction temperature was slowly raised to 23°C and stirring was continued for a further 15 hours. The volatiles were then removed under reduced pressure and the crude product was extracted in toluene/pentane to afford the pure compound.
A sample of the TMA-treated silica (45.9 g) prepared as in example 13 above was suspended in 100 $cm^3$ heptane at 60°C. (t-BuCp)(n-PrCp)$ZrCl_2$ (1.216 g) dissolved in 40 $cm^3$ toluene was slowly added to the suspension and stirring was continued for 1 hour after the metallocene solution had been fully added. The solvents were removed under reduced pressure to give a free-flowing powder.
This catalyst was then used in ethylene/1-butene polymerization as in Example 13 above.

## Example 16

The supported catalyst described in Example 15 was used in ethylene/1-butene co-polymerization in the following manner. Ethylene was co-polymerized with 1-butene in a semi-batch gas-phase reactor at 85°C. The pressure in the reactor was held constant by continuously feeding 5 mole % mixture of 1-butene in ethylene (Scott specialty Gases) to compensate for any pressure change due to polymerization. After 1 hour, the polymer was separated from the seed bed material and analyzed for resin density and molecular weight attributes.

## Example 17

Mixed $(n\text{-}PrCp)_2ZrCl_2$ / (t-BuCp) $_2ZrCl_2$ catalyst

A sample (12.6 g) of the supported $(n\text{-}PrCp)_2ZrCl_2$ catalyst described in Example 13 above was mixed with 12.6 g sample of the supported $(t\text{-}BuCp)_2ZrCl_2$ catalyst described in Example 2 above. This mixture was shaken well enough in flask to ensure a homogeneous mix of the two supported catalysts.
The resulting mixed catalyst was used for ethylene/1-butene co-polymerization as described in Example 13 above.

## Example 18

Mixed $(n\text{-}PrCp)_2ZrCl_2$ / $(t\text{-}BuCp)_2ZrCl_2$ Catalyst

A sample (30 g) of the support material described in Example 13 was suspended in 100 $cm^3$ heptane at 60°C. A combination of $(n\text{-}PrCp)_2ZrCl_2$ (0.381 g) and $(t\text{-}BuCp)_2ZrCl_2$ (0.409 g) dissolved in 40 $cm^3$ toluene was slowly added to the slurry of the support. After complete addition of the metallocene solution, stirring was a continued for an additional 1 h before the drying the catalyst to free-flowing powder under reduced pressure. The final catalyst had 0,6wt% transition metal loading with a ratio of the two metallocenes being 1:1.
The resulting catalyst was then used in ethylene/1-butene co-polymerization as described in Example 13 using a 300 ppm hydrogen concentration.

## Example 19

Mixed $(n\text{-}PrCp)_2ZrCl_2$ / $(t\text{-}BuCp)_2ZrCl_2$ Catalyst

The catalyst described in Example 18 above was used for ethylene/1-butene co-polymerization as described in Example 13, but, using 50 ppm hydrogen concentration in the reactor.

TABLE 2

| Example | Catalyst Rate (g/h) | Product Rate (g/h) | Efficiency[1] g/g | Density g/cc | Mw g/mol | MWD | Zr wt% | |
|---|---|---|---|---|---|---|---|---|
| | | | | | | | $(t-BuCp)_2$ $ZrCl_2$ | (nPrCp)2 $ZrCl_2$ |
| 13 | 0.364 | 355 | 975 | 0.909 | 102800 | 2.8 | - | 0.6 |
| 14 | 0.164 | 166 | 1013 | 0.910 | 89000 | 4.6 | 0.6 | - |
| 15 | 0.043 | 170 | 3910 | 0.904 | 98300 | 2.4 | 0.34* | 0.26* |
| 16 | 0.200 | 152 | 760 | 0.944 | 103800 | 2.6 | 0.34* | 0.26* |
| 17 | 0.097 | 254 | 2622 | 0.904 | 109000 | 3.0 | 0.3 | 0.3 |
| 18 | 0.189 | 177 | 936 | 0.906 | 80300 | 4.3 | 0.3 | 0.3 |
| 19 | 0.151 | 169 | 1118 | 0.905 | 130500 | 4.1 | 0.3 | 0.3 |

1. Efficiency at 150 psi;

* The Zr loading takes into account the weight contribution of the t-Bu group relative to the n-Pr group.

**Example 20**

**$(n-PrCp)_2ZrCl_2$ / $(i-PrCp)_2ZrCl_2$ Catalyst**

A 20 gram sample of a 200°C silica gel was suspended in 120 $cm^3$ toluene in a 500-$cm^3$ reaction flask equipped with a stirrer and a dropping funnel. The flask was cooled to 0°C and 47 $cm^3$ of a 30 wt% methyl-alumoxane (MAO) solution in toluene was added slowly. After 15 minutes, the temperature was raised to 70°C and the reaction continued for 3 h. Then 0.167 g $(n-PrCp)_2ZrCl_2$ combined in a vial with 0.667 g $(i-PrCp)_2ZrCl_2$ was dissolved in 25 $cm^3$ toluene and the resulting homogeneous mixture of the metallocenes was added slowly to the suspension of the support at 70°C. Reaction continued for 1 hour and then solvent was removed under reduced pressure to give a free-flowing powder. This catalyst with 0.6 wt% Zr loading, 80% of which is due to the $(i-PrCp)_2ZrCl_2$ metallocene, was tested in a manner similar the one described in Example 16 for ethylene/1-butene polymerization; the results are shown in Table 3.

**Example 21**

**$(n-PrCP)_2ZrCl_2$ / $(i-PrCp)_2ZrCl_2$ catalyst**

A 30 g sample of a 200°C silica gel was suspended in 200 $cm^3$ toluene in a 500-$cm^3$ reaction flask equipped with a stirrer and a dropping funnel. The flask was cooled to 0°C and 106 $cm^3$ of a 30 wt% MAO solution in toluene was added slowly. After 15 minutes, the temperature was raised to 70°C and the reaction continued for 4 h. Then 0.377 g $(n-PrCp)_2ZrCl_2$ combined in a vial with 1.508 g $(i-PrCp)_2ZrCl_2$ was dissolved in 30 $cm^3$ toluene and the resulting homogeneous mixture of the metallocenes was added slowly to the suspension of the support at 70°C. Reaction continued for 1.5 h and then solvent was removed under reduced pressure to give a free-flowing powder. This catalyst with 0.75 wt% Zr loading, 80% of which is due to the $(i-PrCp)_2ZrCl_2$ metallocene, was tested in a manner similar the one described in Example 16 for ethylene/1-butene polymerization; the results are shown in Table 3.

**Example 22**

**$(n-PrCp)_2ZrCl_2$ / $(i-PrCp)_2ZrCl_2$ Catalyst**

At 24°C, 1 kg of 200°C dehydrated silica was charged into an 8-liter reactor and 3.5 liters of a 30 wt% methyl-alumoxane in toluene was added followed by the addition of 3 liters of dried toluene. The temperature was then raised to 68°C and the mixture was stirred for 4 hours. Then 49.5 g of $(i-PrCp)_2ZrCl_2$ mixed with 12.4 g $(n-PrCp)_2ZrCl_2$ and dissolved together in 300 cc of dry toluene was slowly added. Stirring continued for 2 more hours after all the metallocene solution had been added. The solvent was then removed at the reaction temperature to afford a free-flowing powder. A sample of the catalyst was tested for ethylene/1-butene polymerization as described in Example 16; the results are shown in Table 3.

**Example 23**

**$(n\text{-}PrCp)_2ZrCl_2$ / $(i\text{-}PrCp)_2ZrCl_2$ Catalyst**

A 20 g sample of a 200°C silica gel was suspended in 120 $cm^3$ toluene in a 500-$cm^3$ reaction flask equipped with a stirrer and a dropping funnel. The flask was cooled to 0°C and 60 $cm^3$ of a 30 wt% MAO solution in toluene was added slowly. After 15 minutes, the temperature was raised to 70°C and the reaction continued for 4 h. Then 0.377 g $(n\text{-}PrCp)_2ZrCl_2$ combined in a vial with 1.508 g $(i\text{-}PrCp)_2ZrCl_2$ was dissolved in 25 $cm^3$ toluene and the resulting homogeneous mixture of the metallocenes was added slowly to the suspension of the support at 70°C. Reaction continued for 1.5 h and then solvent was removed under reduced pressure to give a free-flowing powder. This catalyst with 0.75 wt% Zr loading, 70% of which is due to the $(i\text{-}PrCp)_2ZrCl_2$ metallocene, was tested in a manner similar the one described in Example 16 for ethylene/1-butene polymerization; the results are shown in Table 3.

**Example 24**

**$(n\text{-}PrCP)_2ZrCl_2$ / $(i\text{-}PrCp)_2ZrCl_2$ Catalyst**

At 24°C, 800 g of 200°C dehydrated silica was charged into an 8-liter reactor and 1570 $cm^3$ of a 30 wt% MAO in toluene was added followed by the addition of 2 liters of dried toluene. The temperature was then raised to 68°C and the mixture was stirred for 4 hours. Then 22.1 g of $(i\text{-}PrCp)_2ZrCl_2$ mixed with 8.8 g $(n\text{-}PrCp)_2ZrCl_2$ and dissolved together in 200 cc of dry toluene was slowly added. Stirring continued for 1 more hours after all the metallocene solution had been added. The solvent was then removed at the reaction temperature to afford a free-flowing powder. A sample of the catalyst was tested for ethylene/1-butene polymerization as described in Example 16 at different concentrations of aluminum alkyl on the seed bed; the results are shown in Table 3.

**Examples 25 & 26**

$(n\text{-}PrCp)_2ZrCl_2$ / $(i\text{-}PrCp)_2ZrCl_2$ Catalyst

The catalyst described in Example 24 above was used for ethylene/1-butene ca-polymerization as described in Example 16, but, at different levels of aluminum alkyl on the seed bed. The results are summarized in Table 3.

**Example 27**

$(n\text{-}PrCp)_2ZrCl_2$ / $(i\text{-}PrCp)_2ZrCl_2$ Catalyst

The catalyst described in Example 24 above was used for ethylene/1-butene co-polymerization as described in Example 13 with 700 ppm hydrogen in the reactor. The results are summarized in Table 3.

**Example 28**

$(n\text{-}PrCp)_2ZrCl_2$ / $(i\text{-}PrCp)_2ZrCl_2$ Catalyst

A 16.5 g sample of a 200°C silica gel was suspended in 150 $cm^3$ toluene in a 500-$cm^3$ reaction flask equipped with a stirrer and a dropping funnel. The flask was cooled to 0°C and 47 $cm^3$ of a 30 wt% MAO solution in toluene was added slowly. After 30 minutes, the temperature was raised to 70°C and the reaction continued for 3 hours. Then 0.176 g $(n\text{-}PrCp)_2ZrCl_2$ combined in a vial with 0.440 g $(i\text{-}PrCp)_2ZrCl_2$ was dissolved in 25 $cm^3$ toluene and the resulting homogeneous mixture of the metallocenes was added slowly to the suspension of the support at 70°C. Reaction continued for 1 h and then solvent was removed under reduced pressure to give a free-flowing powder. This catalyst with 0.5 wt% Zr loading, 70% of which is due to the $(i\text{-}PrCp)_2ZrCl_2$ metallocene, was tested in a manner similar the one described in Example 16 for ethylene/1-butene polymerization; the results are shown in Table 3.

**Examples 29 and 30**

$(n\text{-}PrCp)_2ZrCl_2$ / $(i\text{-}PrCp)_2ZrCl_2$ catalyst

A 20 g sample of a 200°C silica gel was suspended in 130 $cm^3$ toluene in a 500-$cm^3$ reaction flask equipped with a stirrer and a dropping funnel. The flask was cooled to 0°C and 47 $cm^3$ of a 30 wt% MAO solution in toluene was added slowly. After 30 minutes, the temperature was raised to 70°C and the reaction continued for 3 hours. Then 0.493 g $(i\text{-}PrCp)_2ZrCl_2$ dissolved in 23 $cm^3$ toluene was added slowly to the suspension of the support at 70°C. Reaction continued for 1 h and then 0.493 g $(i\text{-}PrCp)_2ZrCl_2$ dissolved in 23 $cm^3$ toluene was added slowly to the suspension of the support at 70°C. Reaction continued for 1 h and then 0.198 g $(n\text{-}PrCp)_2ZrCl_2$ dissolved in 23 $cm^3$ toluene was added slowly. After 1 h, the solvent was removed under reduced pressure to give a free-flowing powder. This catalyst with 0.5 wt% Zr loading, 70% of which is due to the $(i\text{-}PrCp)_2ZrCl_2$ metallocene, was tested in a manner similar the one described in Example 16 for ethylene/1-butene polymerization; Example 30 followed this Example 29 except that 0.197 g$(i\text{-}PrCp)_2ZrCl_2$ and .493 g $(n\text{-}PrCp)_2ZrCl_2$ were used; the results are shown in Table 3.

**Comparative Example 31**

$(n\text{-}PrCp)_2ZrCl_2$ catalyst

At 24°C, 680 g sample of 200°C dehydrated silica was charged into an 8-liter reactor and 1200 $cm^3$ of a 30 wt% MAO in toluene was added followed by the addition of 2 liters of dried toluene. The temperature was then raised to 68°C and the mixture was stirred for 4 hours. Then 16.5 g $(n\text{-}PrCp)_2ZrCl_2$ and dissolved in 200 cc of dry toluene was slowly added. Stirring continued for 2 more hours after all the metallocene solution had been added. The solvent was then removed at the reaction temperature to afford a free-flowing powder. A sample of the catalyst was tested for ethylene/1-butene polymerization as described in Example 16. The results are shown in Table 3.

**Example 32 (comparative)**

**$(i\text{-}PrCp)_2ZrCl_2$ Catalyst**

A 20 g sample of a 200°C silica gel was suspended in 120 $cm^3$ toluene in a 500-$cm^3$ reaction flask equipped with a stirrer and a dropping funnel. The flask was cooled to 0°C and 90 $cm^3$ of a 30 wt% MAO solution in toluene was added slowly. After 45 minutes, the temperature was raised to 70°C and the reaction continued for 4 h. Then 1.32 g $(i\text{-}PrCp)_2ZrCl_2$ was dissolved in 30 $cm^3$ toluene and added slowly to the suspension of the support at 70°C. Reaction continued for 1 h and then the solvent was removed under reduced pressure to give a free-flowing powder. This catalyst was tested in a manner similar the one described in Example 16 for ethylene/1-butene polymerization; the results are shown in Table 3.

TABLE 3

| Example | Alkyl on Bed[1] | Catalyst Rate | Product Rate[2] | Efficiency[2] | Mw | MWD | Zr wt% | |
|---|---|---|---|---|---|---|---|---|
| | (ppm) | (g/h) | (g/h) | (g/g) | (g/mol) | | $(iPrCp)_2ZrCl_2$ | $(nPrCp)_2ZrCl_2$ |
| 20 | 213 | 0.20 | 226 | 1131 | 80500 | 5.7 | 0.48 | 0.12 |
| 21 | 127 | 0.15 | 251 | 1670 | 84700 | 4.2 | 0.60 | 0.15 |
| 22 | 129 | 0.15 | 237 | 1582 | 86200 | 4.5 | 0.60 | 0.15 |
| 23 | 185 | 0.23 | 488 | 2123 | 74200 | 3.6 | 0.54 | 0.22 |
| 24 | 0 | 0.30 | 322 | 1076 | 77400 | 4.2 | 0.43 | 0.17 |
| 25 | 82 | 0.20 | 257 | 1283 | 87000 | 3.9 | 0.43 | 0.17 |
| 26 | 193 | 0.21 | 245 | 1169 | 82000 | 3.8 | 0.43 | 0.17 |
| 27 | 200 | 0.13 | 252 | 1924 | 33900 | 4.2 | 0.43 | 0.17 |

1. Aluminum alkyl concentration on polymer bed in the reactor (alkyl used as impurity scavenger)
2. At 150 psi.

TABLE 3 (continued)

| Example | Alkyl on Bed[1] | Catalyst Rate | Product Rate[2] | Efficiency[2] | Mw | MWD | Zr wt% | |
|---|---|---|---|---|---|---|---|---|
| | (ppm) | (g/h) | (g/h) | (g/g) | (g/mol) | | $(iPrCp)_2ZrCl_2$ | $(nPrCp)_2ZrCl_2$ |
| 28 | 131 | 0.29 | 358 | 1234 | 66000 | 5.9 | 0.36 | 0.14 |
| 29 | 131 | 0.20 | 334 | 1672 | 72100 | 3.7 | 0.36 | 0.14 |
| 30 | 129 | 0.22 | 355 | 1614 | 76100 | 4.6 | 0.36 | 0.14 |
| 31 | 86 | 0.18 | 246 | 2887 | 67400 | 2.8 | - | 0.40 |
| 32 | 228 | 0.21 | 90 | 429 | 109500 | 10.5 | 0.70 | - |

1. Aluminum alkyl concentration on polymer bed in the reactor (alkyl used as impurity scavenger)
2. At 150 psi.

**<u>Example 33 - IMPROVED TENSILE IMPACT STRENGTH</u> (comparative)**

For this Example, six polymers were produced by the catalyst and method of the present invention and two commercial type ethylene-butene copolymers were produced by prior art catalysts and methods, with the results presented in Tables IV, V and VI. The experimental copolymers, Polymers A-F, were produced in a gas phase reactor with a catalyst of the present invention, a bis(isopropyl cyclopentadienyl) zirconium dichloride or bis(t-butyl cyclopentadienyl) zirconium dichloride. The two commercial copolymers utilized as comparative controls, Polymers G-H, were produced in a fluidized bed gas phase reactor; example G with a Ti-based multisite catalyst, example H with a Cr-based multisite catalyst.

The structure of each copolymer is characterized by its density, molecular weight profile, and short-chain branching distribution. The processability of each is indicated by its capillary rheology response; its toughness, by its impact resistance.

All eight Polymers A-H fall within the 0.910-0.920 g/cc density range, as determined by ASTM D-792.

The principal structural distinction between copolymers A-F and the commercial copolymers G-H is intermolecular short-chain branching (SCB) distribution. The Polymers A-F formed utilizing the catalyst and method of the present invention all have considerably narrower SCB distributions than the controls, as evidenced by their high Composition Distribution Breadth Indices (CDBI), low hexane extractables (at equivalent density), and the absence of any unbranched material (no homopolymer). Both controls have very broad SCB distributions; each has a low CDBI, high hexane extractables (at equivalent density), and high homopolymer content. Narrow SCB distributions are achieved with a metallocene-alumoxane catalyst of the invention; broad SCB distributions are common to all commercial, conventional Ziegler-type catalyst used to produce linear polyolefins.

The most significant distinctions between Polymers A-F of the present invention and the control Polymers G and H are extractables, impact strength-processability balance, and homopolymer content. At equivalent densities, the lower extractables in the experimental samples indicates that films made with these copolymers will have lower reblock than films made with conventional Ziegler-type catalyzed copolymers. At equivalent Mw, the processability of the experimental copolymers is slightly better than that of the Ti-based commercial copolymer. At equivalent Mw, the tensile impact of the experimental copolymers is approximately three times higher than that of both conventional Ziegler-type catalyzed copolymers. At equivalent density, the very low homopolymer content in the experimental copolymers indicates that films made with these materials will have better clarity than films made with conventional Ziegler-type catalyzed copolymers.

The catalysts utilized in the present invention are pure single site catalysts. FIG. 1 is a $^1H$ NMR (400MHz) trace for $(t\text{-}BuCp)_2ZrCl_2$ showing the methyl protons of the t-butyl at about 1.25 ppm and showing the protons on the Cp ring at about 6.3 ppm. FIG. 2 is a $^1H$ NMR(400MHz) trace for $(i\text{-}PrCp)_2ZrCl_2$ showing the methyl protons of the i-propyl at about 1.2 ppm, the methine proton of the i-propyl at about 3.1 ppm, and showing the protons on the Cp ring at about 6.2 ppm.

TABLE IV

| Ethylene-Butene Copolymers Produced In A Single, Gas Phase Reactor With $Bis(R\text{-}Cp)_2ZrCl_2$ Catalysts | | | |
|---|---|---|---|
| **Attribute** | **Polymer A** | **Polymer B** | **Polymer C** |
| Cp R-group | i-propyl | i-propyl | t-butyl |

TABLE IV (continued)

| Ethylene-Butene Copolymers Produced In A Single, Gas Phase Reactor With Bis(R-Cp)$_2$ZrCl$_2$ Catalysts | | | |
|---|---|---|---|
| **Attribute** | **Polymer A** | **Polymer B** | **Polymer C** |
| density | 0.916 g/cc | 0.919 g/cc | 0.919 g/cc |
| Mn | 23,700 | 17,100 | 19,200 |
| Mw | 106,500 | 95,600 | 89,000 |
| Mz | 285,300 | 236,300 | 186,000 |
| Mw/Mn | 4.5 | 5.6 | 4.6 |
| Mz/Mw | 2.7 | 2.5 | 2.1 |
| CDBI | 56.8% | 55.1% | 54.5% |
| Hexane Extractables | 4.1% | 4.2% | 13.3% |
| Homopolymer Content | <0.1% | <0.1% | <.01 |
| Viscosity 190°C | | | |
| @13.7 $s^{-1}$ | 4550 Pa-sec | 355 Pa-sec | 3315 Pa sec |
| @34.2 $s^{-1}$ | 3175 Pa-sec | 2655 Pa-sec | 2380 Pa-sec |
| @68.3 $s^{-1}$ | 2290 Pa-sec | 2045 Pa-sec | 1810 Pa-sec |
| @137 $s^{-1}$ | 1640 Pa-sec | 1475 Pa-sec | 1325 Pa-sec |
| @342 $s^{-1}$ | 960 Pa-sec | 905 Pa-sec | 815 Pa-sec |
| Onset of Melt Fracture | 342$s^{-1}$ | 683 $s^{-1}$ | 683 $s^{-1}$ |
| Tensile Impact | 347 ft-lb/in$^2$ | 282 ft-lb/in$^2$ | 345 ft-lb/in$^2$ |

TABLE V

| Ethylene-Butene Copolymers Produced In A Single, Gas Phase Reactor With Bis(R-Cp)$_2$ZrCl$_2$ Catalysts (con't) | | | |
|---|---|---|---|
| **Attribute** | **Polymer D** | **Polymer E** | **Polymer F** |
| Cp R-group | t-butyl | i-propyl | i-propyl |
| density | 0.910 g/cc | 0.919 g/cc | 0.914 g/cc |
| Mn | 7,300 | 13,400 | 20,100 |
| Mw | 59,800 | 65,600 | 176,300 |
| Mz | 144,200 | 151,600 | 421,100 |
| Mw/Mn | 8.1 | 4.9 | 8.8 |
| Mz/Mw | 2.5 | 2.3 | 2.4 |
| CDBI | 60.9% | 59.6% | 61.8% |
| Hexane Extractables | N/A | N/A | N/A |
| Homopolymer Content | <0.1% | <0.1% | <0.1% |
| Viscosity 190°C | | | |
| @13.7 $s^{-1}$ | 1025 Pa-sec | 1265 Pa-sec | 14500 Pa-sec |
| @34.2 $s^{-1}$ | 835 Pa-sec | 875 Pa-sec | 8100 Pa-sec |
| @68.3 $s^{-1}$ | 710 Pa-sec | 785 Pa-sec | (4380 Pa-sec) |
| @137 $s^{-1}$ | 580 Pa-sec | 635 Pa-sec | (2260 Pa-sec) |
| @342 $s^{-1}$ | 390 Pa-sec | 440 Pa-sec | (935 Pa-sec) |

TABLE V (continued)

| Ethylene-Butene Copolymers Produced In A Single, Gas Phase Reactor With Bis(R-Cp)$_2$ZrCl$_2$ Catalysts (con't) | | | |
|---|---|---|---|
| **Attribute** | **Polymer D** | **Polymer E** | **Polymer F** |
| Onset of Melt Fracture | None Observed | 3420 $s^{-1}$ | 34.2 $s^{-1}$ |
| Tensile Impact | 60 ft-lb/in$^2$ | 49 ft-lb/in$^2$ | 512 ft-lb/in |

TABLE VI

| Ethylene-Butene Copolymers Produced In A Single, Gas Phase Reactor With Commercial, Conventional Ziegler-Type Catalysts | | |
|---|---|---|
| **Attribute** | **Polymer G** | **Polymer H** |
| Cp R-group | Titanium-based | Chromium-based |
| density | 0.918 g/cc | 0.920 g/cc |
| Mn | 31,800 | 14,000 |
| Mw | 105,600 | 99,500 |
| Mz | 279,800 | 398,400 |
| Mw/Mn | 3.3 | 7.1 |
| Mz/Mw | 2.7 | 5.5 |
| CDBI | 16.8% | 25.9% |
| Hexane Extractables | 9.9% | 16.9% |
| Homopolymer Content | <15.0% | <23.7% |
| Viscosity 190°C | | |
| @13.7 $s^{-1}$ | 4650 Pa-sec | 3075 Pa-sec |
| @34.2 $s^{-1}$ | 3485 Pa-sec | 1995 Pa-sec |
| @68.3 $s^{-1}$ | 2600 Pa-sec | 1400 Pa-sec |
| @137 $s^{-1}$ | 1850 Pa-sec | 980 Pa-sec |
| @342 $s^{-1}$ | 1105 Pa-sec | 575 Pa-sec |
| Onset of Melt Fracture | 683 $s^{-1}$ | None Observed |
| Tensile Impact | 110 ft-lb/in$^2$ | 85 ft-lb/in$^2$ |

The following figures illustrate data for the butene copolymers of the invention of Example 33.

FIG. 3 is a plot of log viscosity vs. log molecular weight for polymers of this invention (solid dot) and for conventional polymers produced by a heterogeneous catalyst of the conventional Ziegler-type catalyst. Viscosity is the key melt property that correlates with such processing parameters as extruder pressure, power draw, torque, etc. Viscosity was measured at 190°C and 340$s^{-1}$.
This plot shows that the processability of polymers of this invention and conventionally produced polymers are equivalent.

FIG. 4 is a plot of tensile impact vs. log molecular weight for polymers of this invention (circles) and for conventional polymers produced by a heterogeneous catalyst of the conventional Ziegler-type catalyst (solid dots). The regression lines for the polymers of this invention and for the conventional Ziegler-type catalyst type polymers are represented by dots and dashes, respectively. The ratio of the slopes of the two linear regression curves is about 4 (1276.66/322.48= 3.959). Generally this ratio will be at least about 1.5, preferably, at least about 2, and most preferably at least about 4.

FIG. 5 is a plot of tensile impact ratio vs. log molecular weight based on modeled data for the polymers of this invention and for conventional Ziegler-type catalyst type polymers. This shows that the polymers of the present invention have at least twice the tensile impact as the controls at a Mw of 60,000 (i.e., certain injection molding applications), and greater that three times the tensile impact of the controls at Mw greater than 70,000 (i.e. film applications).

As shown, the impact varies from about twice to about 3.6 times.

The polymers obtained in the process of this present invention have significantly higher melt strength than products produced with conventional Ziegler-Natta catalysts or with metallocene catalysts, which produce NMWD products as shown in the art in U.S. Pat. No. 4,808,561 issued February 18, 1989 hereby fully incorporated by reference. The following Table VII describes seven NMWD copolymers produced with a conventional Ziegler-Natta catalyst as is generally known in the art or with a metallocene catalysts based on bis(n-butyl cyclopentadienyl) zirconium dichloride or bis(1-methyl-3-n-butyl cyclopentadienyl) zirconium dichloride as is generally known in the art, along with two LDPE's produced by the free-radical process as is known in the art, and a BMWD copolymer produced with the process of this present invention. The weight-average molecular weights (Mw) were measured with a high temperature Gel Permeation Chromatograph. Melt tensile force was measured with a Rheotens Melt Tension Instrument.

Table VII

| **Melt Strength of Polyethylene** | | |
|---|---|---|
| Polyethylene Type | Mw | Melt Tensile Force (cN) |
| NMWD/metallocene catalyst A | 86260 | 2.8 |
| NMWD/metallocene catalyst B | 78700 | 2.0 |
| NMWD/metallocene catalyst B | 92300 | 2.5 |
| NMWD/Ziegler-Natta catalyst | 121210 | 5.2 |
| NMWD/Ziegler-Natta catalyst | 85900 | 2.0 |
| NMWD/Ziegler-Natta catalyst | 98920 | 3.0 |
| NMWD/Ziegler-Natta catalyst | 70620 | 1.0 |
| LDPE/peroxide initiator | 86300 | 8.4 |
| LDPE/peroxide initiator | 82200 | 6.5 |
| BMWD/metallocene catalyst C | 100440 | 9.4 |

The relationship between melt tensile force and molecular weight is illustrated in FIG. 9.

The melt tensile force of the NMWD copolymers is linearly proportional to Mw. The melt tensile force of the two LDPE's and the BMWD linear copolymer are all well above this linear model. The immediate consequence of high melt tensile force is high bubble stability during blown film operations. Each of these three high melt strength products can be extruded into blown film at rates considerably faster than are achievable with the NMWD products.

Another distinctive attribute of products produced in the present process is high film tensile force at low elongation. The following Table VIII describes a linear low density and a linear medium density copolymer produced with a conventional Ziegler-Natta catalyst, and a low density BMWD copolymer produced in the present process. Tensile properties were measured with a United Film Tensile Tester; dart impact and Elmendorf tear were measured according to ASTM D-1709 and D-1922, respectively.

Table VIII

| **LLDPE Blown Film Tensile Properties** | | | |
|---|---|---|---|
| Property | BMWD Product | Reference A | Reference B |
| MI | 1.4 | 1.4 | 1.0 |
| Density | 0.918 | 0.918 | 0.935 |
| MWD | Broad | Narrow | Narrow |
| Catalyst | Metallocene C | Ziegler-Natta | Ziegler-Natta |
| Tensile @ Yield (psi)* | 1340 | 1400 | 2400 |
| Tensile @ 20% Elongation (psi)* | 1720 | 1640 | |
| Tensile @ 100% Elongation (psi)* | 2280 | 1470 | |
| Dart Impact (g/mil) | 165 | 160 | 55 |

*Average: (MD+TD)/2

Table VIII (continued)

| LLDPE Blown Film Tensile Properties | | | |
|---|---|---|---|
| Property | BMWD Product | Reference A | Reference B |
| Elmendorf Tear (g/mil)* | 414 | 448 | 225 |

The traditional way to improve tensile stress at low elongation is to increase crystallinity, i.e., to increase density. However, when density is increased, dart impact and Elmendorf tear both decrease. The preceding table highlights the unusually high tensile force at 100% elongation in the product produced with metallocene C, a force which is close to the tensile force at yield observed with the medium density Ziegler-Natta copolymer. However, this BMWD product does not show the same loss in dart and tear resistance as the medium density Ziegler-Natta product.

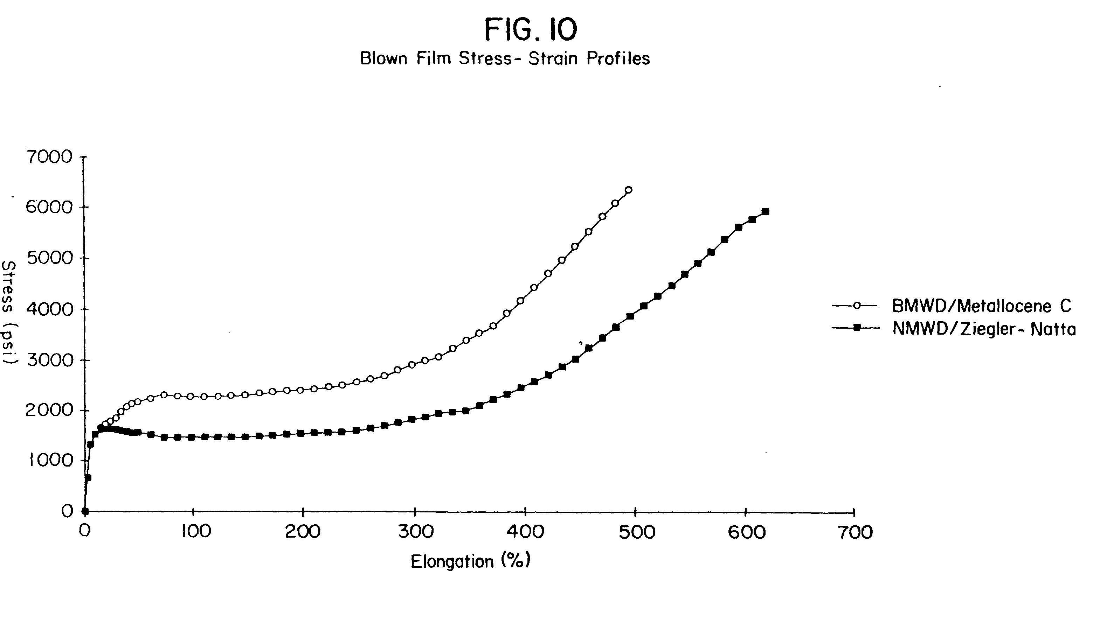

The following FIG. 10 illustrates the stress-strain profiles for the low density Ziegler-Natta product and the low density BMWD product. The Ziegler-Natta product shows the typical single yield point at low elongation, followed by constant stress elongation, strain-hardening, and then breakage. The BMWD product shows a similar profile with one exception. Instead of one yield point, it undergoes a double yield. The tensile stress immediately after the second yield is measurably higher than the stress in the Ziegler-Natta product at the same elongation.

## Claims

**1.** A process for producing polyethylene which comprises

(a) contacting ethylene optionally with an alpha-olefin having 3 or more carbon atoms, with a catalyst system comprising:

(i) at least one first bis-cyclopentadienyl transition metal metallocene represented by the general formula:

$$(C_5R'_k)_g(C_5R'_k)MQ_{3-g},$$

wherein $(C_5R'_k)$ is a substituted or unsubstituted cyclopentadienyl, M is a Group IVB or VB transition metal, each group R' is H, a hydrocarbon group or a substituted hydrocarbon group with at least one substituent R' on one cyclopentadienyl ring of the catalyst system being a hydrocarbon or substituted hydrocarbon group comprising a secondary or tertiary carbon atom through which it is bonded to the cyclopentadienyl group; other substituents R' in the catalyst system may be hydrogen, one or more of the specified secondary or tertiary carbon containing groups or a hydrocarbyl radical containing from 1 to 20 carbon atoms, a silicon-containing hydrocarbyl radical, or a hydrocarbon radical bonded to two carbon atoms of the ring to form a fused ring system, Q may be a hydrocarbyl radical such as aryl, alkyl, alicyclic, alkenyl, alkylaryl, or arylalkyl having 1-20 carbon atom, hydrocarboxyl radical having 1-20 carbon atoms or halogen and can be the same or different or two Q's may be an alkylidene radical having from 1 to 20 carbon atoms, g is 0, 1 or 2; and k is 5; and another second transition metal metallocene having a cyclopentadienyl ring that is substituted or unsubstituted which is physically or chemically mixed with the transition metal metallocene of component (I), and

(ii) an activator for the metallocene under polymerizing conditions to form the desired polyethylene product.

**2.** The process in accordance with claim 1 wherein the ring substituent of the first transition metal metallocene is an alkyl group having from 3 to 20 carbon atoms.

**3.** The process in accordance with claim 1 or claim 2 wherein the alkyl group of the first metallocene is a t-butyl, i-propyl, or a secondary pentyl group.

**4.** The process in accordance with any preceding claim wherein the metal of the transition metal metallocene is independently selected from the group consisting of titanium, zirconium and hafnium.

**5.** The process in accordance with any preceding claim wherein the activator (ii) comprises an alumoxane or an ionic activator.

**6.** The process in accordance with any preceding claim wherein at least one of the transition metal metallocenes is supported.

7. The process in accordance with any preceding claim wherein the catalyst system comprises at least one supported transition metal metallocene in a physical admixture with a supported second transition meal metallocene.

8. The process in accordance with any preceding claim when performed in solution, gas, or slurry phase.

9. The process in accordance with any preceding claim wherein the polyethylene product has a molecular weight distribution (MWD) greater than 4.

10. The process in accordance with any preceding claim wherein the polyethylene product has a weight average molecular weight (Mw) greater than 50,000.

**Patentansprüche**

1. Verfahren zur Herstellung von Polyethylen, bei dem
(a) Ethylen gegebenenfalls mit Co-monomer mit 3 oder mehr Kohlenstoffatomen mit einem Katalysatorsystem kontaktiert wird, das

(i) mindestens ein erstes Bis-Cyclopentadienyl-Übergangsmetallmetallocen der allgemeinen Formel:

$$(C_5R'_k)_g(C_5R'_k)MQ_{3-g},$$

in der $(C_5R'_k)$ ein substituiertes oder unsubstituiertes Cyclopentadienyl ist, M ein Gruppe-IVB- oder -VB-Übergangsmetall ist, jede Gruppe R' H, eine Kohlenwasserstoffgruppe oder eine substituierte Kohlenwasserstoffgruppe ist, wobei mindestens ein Substituent R' an einem Cyclopentadienylring des Katalysatorsystems eine Kohlenwasserstoff- oder substituierte Kohlenwasserstoffe ist, die ein sekundäres oder tertiäres Kohlenstoffatom umfaßt, durch das sie an die Cyclopentadienylgruppe gebunden ist, wobei andere Substituenten R' in dem Katalysatorsystem Wasserstoff, ein oder mehrere der spezifizierten sekundären oder tertiären Kohlenstoff enthaltenen Gruppen oder ein Kohlenwasserstoffrest mit 1 bis 20 Kohlenstoffatomen, ein Silicium enthaltender Kohlenwasserstoffrest oder ein Kohlenwasserstoffrest, der an zwei Kohlenstoffatome des Ringes unter Bildung eines kondensierten Ringsystems sein können, Q ein Kohlenwasserstoffrest wie baispielsweise eine Aryl-, Alkyl-, alicyclische, Alkenyl-, Alkylaryl- oder Arylalkylgruppe mit 1 bis 20 Kohlenstoffatomen, ein Kohlenwasserstoffcarboxylrest mit 1 bis 20 Kohlenstoffatomen oder Halogen sein kann und gleich oder verschieden sein kann, oder zwei Q einen Alkylidenrest mit 1 bis 20 Kohlenstoffatomen bilden können, g 0,1 oder 2 ist und k 5 ist, und ein anderes zweites Übergangsmetallmetallocen mit einem Cyclopentadienylring, der substituiert oder unsubstituiert ist, das physikalisch oder chemisch mit dem Übergangsmetallmetallocen von Komponente (1) gemischt ist und

(ii) Aktivator für das Metallocen unter Polymerisationsbedingungen zur Bildung des gewünschten Polyethylenprodukts umfaßt.

2. Verfahren nach Anspruch 1, bei dem der Ringsubstituent des ersten Übergangmetallmetallocens eine Alkylgruppe mit 3 bis 20 Kohlenstoffatomen ist.

3. Verfahren nach Anspruch 1 oder Anspruch 2, bei dem die Alkylgruppe des ersten Metallocens eine t-Butyl-, i-Propyl- oder eine sekundäre Pentylgruppe ist.

4. Verfahren nach einem der vorhergehenden Ansprüche, bei dem das Metall des Übergangsmetallocens unabhängig ausgewählt ist aus der Gruppe bestehend aus Titan, Zirconium und Hafnium.

5. Verfahren nach einem der vorhergehenden Ansprüche, bei dem der Aktivator (ii) Alumoxan oder ionischen Aktivator umfaßt.

6. Verfahren nach einem der vorhergehenden Ansprüche, bei dem mindestens eines der Übergangsmetallmetallocene auf einem Träger vorliegt.

7. Verfahren nach einem der vorhergehenden Ansprüche, bei dem das Katalysatorsystem mindestens ein auf einem Träger vorhandenes Übergangsmetallmetallocen in physikalischem Gemisch mit einem zweiten auf einem Träger vorhandenen Übergangsmetallmetallocen umfaßt.

**8.** verfahren nach einem der vorhergehenden Ansprüche, wenn es in Lösung, Gas- oder Aufschlämmungphase durchgeführt wird.

**9.** , Verfahren nach einem der vorhergehenden Ansprüche, bei dem das Polyethylenprodukt eine Molekulargewichtsverteilung (MWD) größer als 4 aufweist.

**10.** Verfahren nach einem der vorhergehenden Ansprüche, bei dem das Polyethylenprodukt ein durchschnittliches gewichtsmäßiges Molekulargewicht (Mw) größer als 50 000 aufweist.

**Revendications**

**1.** Procédé pour la production de polyéthylène, qui comprend les étapes consistant
(a) à mettre en contact de l'éthylène. facultativement avec un comonomère ayant 3 ou plus de 3 atomes de carbone, avec un système de catalyseur comprenant :

(i) au moins un premier métallocène bicyclo-pentadiénylique de métal de transition représenté par la formule générale :

$$(C_5R'_k)_g(C_5R'_k)MQ_{3-g'}$$

dans laquelle ($C_5R'_k$) représente un groupe cyclopentadiényle substitué ou non substitué, M représente un métal de transition du Groupe IVB ou VB, chaque groupe R' représente H, un groupe hydrocarboné ou un groupe hydrocarboné substitué, au moins un substituant R' sur un noyau cyclopentadiényle du système de catalyseur étant un groupe hydrocarboné ou hydrocarboné substitué comprenant un atome de carbone secondaire ou tertiaire par lequel il est lié au groupe cyclopentadiényle ; les autres substituants R' dans le système de catalyseur peuvent représenter l'hydrogène, un ou plusieurs des groupes spécifiés contenant un atome de carbone secondaire ou tertiaire ou un radical hydrocarbyle contenant 1 à 20 atomes de carbone, un radical hydrocarbyle contenant du silicium, ou un radical hydrocarboné lié à deux atomes de carbone du noyau pour former un système cyclique condensé, Q peut représenter un radical hydrocarbyle tel qu'un radical aryle, alkyle, alicylique, alcényle, alkylaryle ou arylalkyle ayant 1 à 20 atomes de carbone, un radical hydrocarboxyle ayant 1 à 20 atomes de carbone ou un halogène, les groupes Q pouvant être identiques ou différents, ou bien deux groupes Q peuvent représenter un radical alkylidène ayant 1 à 20 atomes de carbone, g est égal à 0, 1 ou 2 ; et k est égal à 5 ; et un second métallocène de métal de transition, différent, ayant un noyau cyclopentadiényle qui est substitué ou non substitué, qui est mélangé physiquement ou chimiquement au métallocène de métal de transition du constituant (i), et
(ii) un activateur pour le métallocène dans des conditions de polymérisation pour former le produit consistant en le polyéthylène désiré.

**2.** Procédé suivant la revendication 1, dans lequel le substituant du noyau du premier métallocène de métal de transition est un groupe alkyle ayant 3 à 20 atomes de carbone.

**3.** procédé suivant la revendication 1 ou la revendication 2, dans lequel le groupe alkyle du premier métallocène est un groupe tertio-butyle, un groupe isopropyle ou un groupe pentyle secondaire.

**4.** Procédé suivant l'une quelconque des revendications précédentes, dans lequel le métal du métallocène de métal de transition est choisi indépendamment dans le groupe consistant en le titane, le zirconium et l'hafnium.

**5.** Procédé suivant l'une quelconque des revendications précédentes, dans lequel l'activateur (ii) comprend un alumoxane ou un activateur ionique.

**6.** Procédé suivant l'une quelconque des revendications Précédentes, dans lequel au moins un des métallocènes de métaux de transition est fixé sur un support.

**7.** Procédé suivant l'une quelconque des revendications Précédentes, dans lequel le système de catalyseur comprend au moins un métallocène de métal de transition fixé sur un support en mélange physique avec un second métallocène de métal de transition fixé sur un support.

**8.** Procédé suivant l'une quelconque des revendications précédentes, mis en oeuvre en solution, en phase gazeuse ou en suspension.

**9.** Procédé suivant l'une quelconque des revendications précédentes, dans lequel le produit consistant en polyéthylène a une distribution des poids moléculaires (DPM) supérieure à 4.

**10.** Procédé suivant l'une quelconque des revendications précédentes, dans lequel le produit consistant en poiyéthyléne a une moyenne en poids du poids moléculaire (Mw) supérieure à 50 000.

FIG. 1

$^1H$ NMR (400 MHz) of Bis(i-Propyl Cyclopentadienyl) Zirconium Dichloride

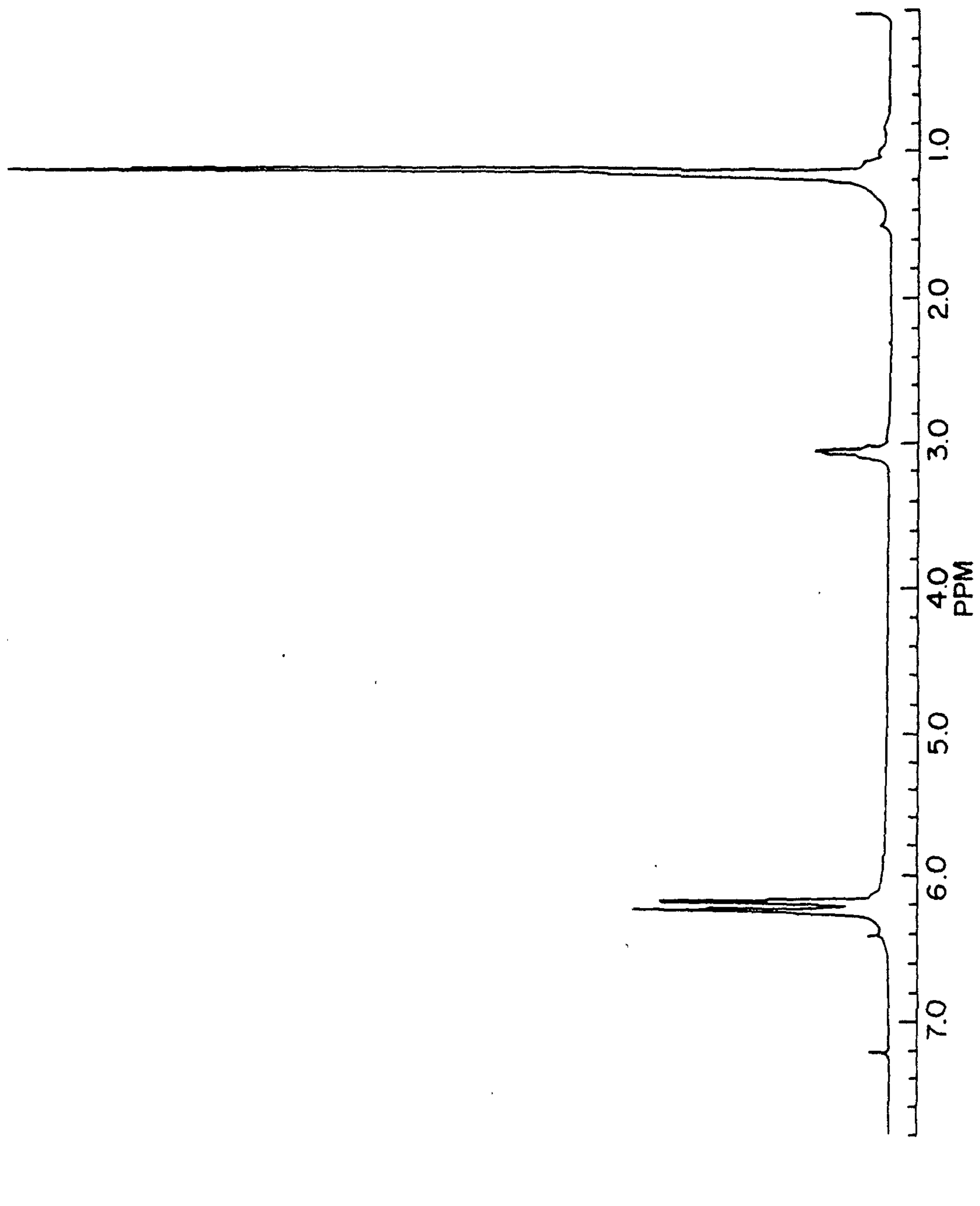

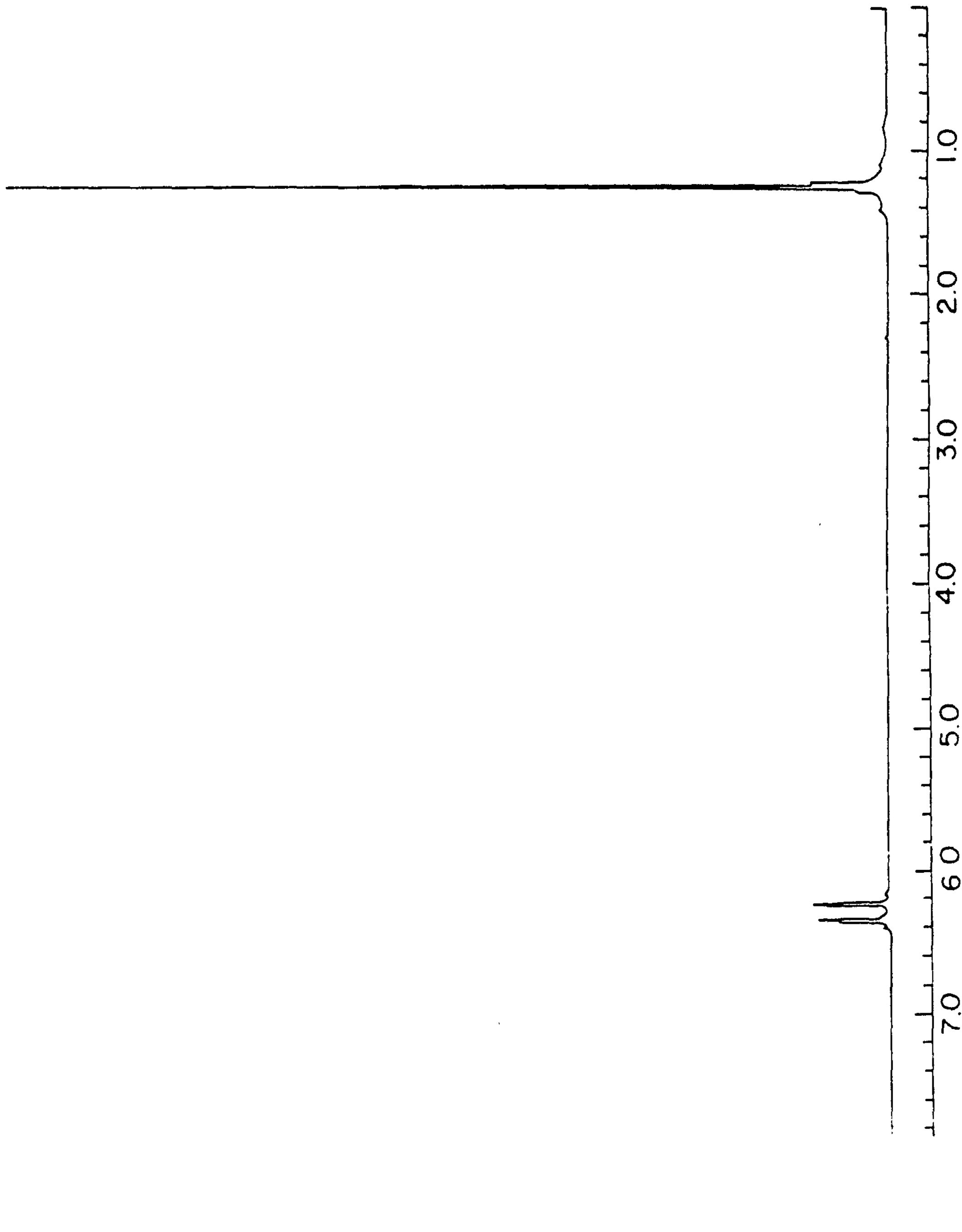


FIG. 2

$^1H$ NMR (400 MHz) of Bis(t-ButylCyclopentadienyl) Zirconium Dichloride

FIG. 3

Linear Polyethylenes

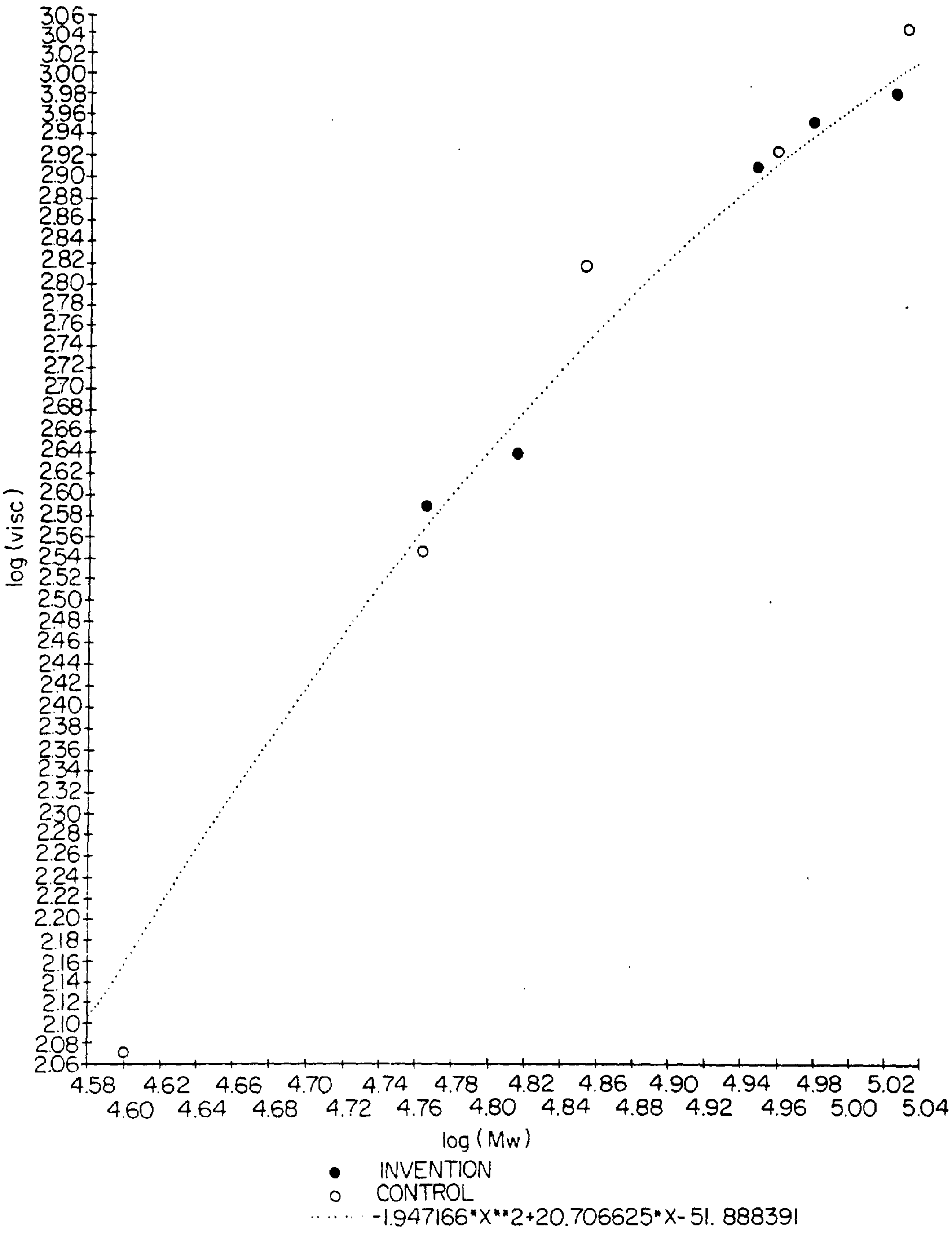

FIG.4

Toughness- Molecular Weight Balance

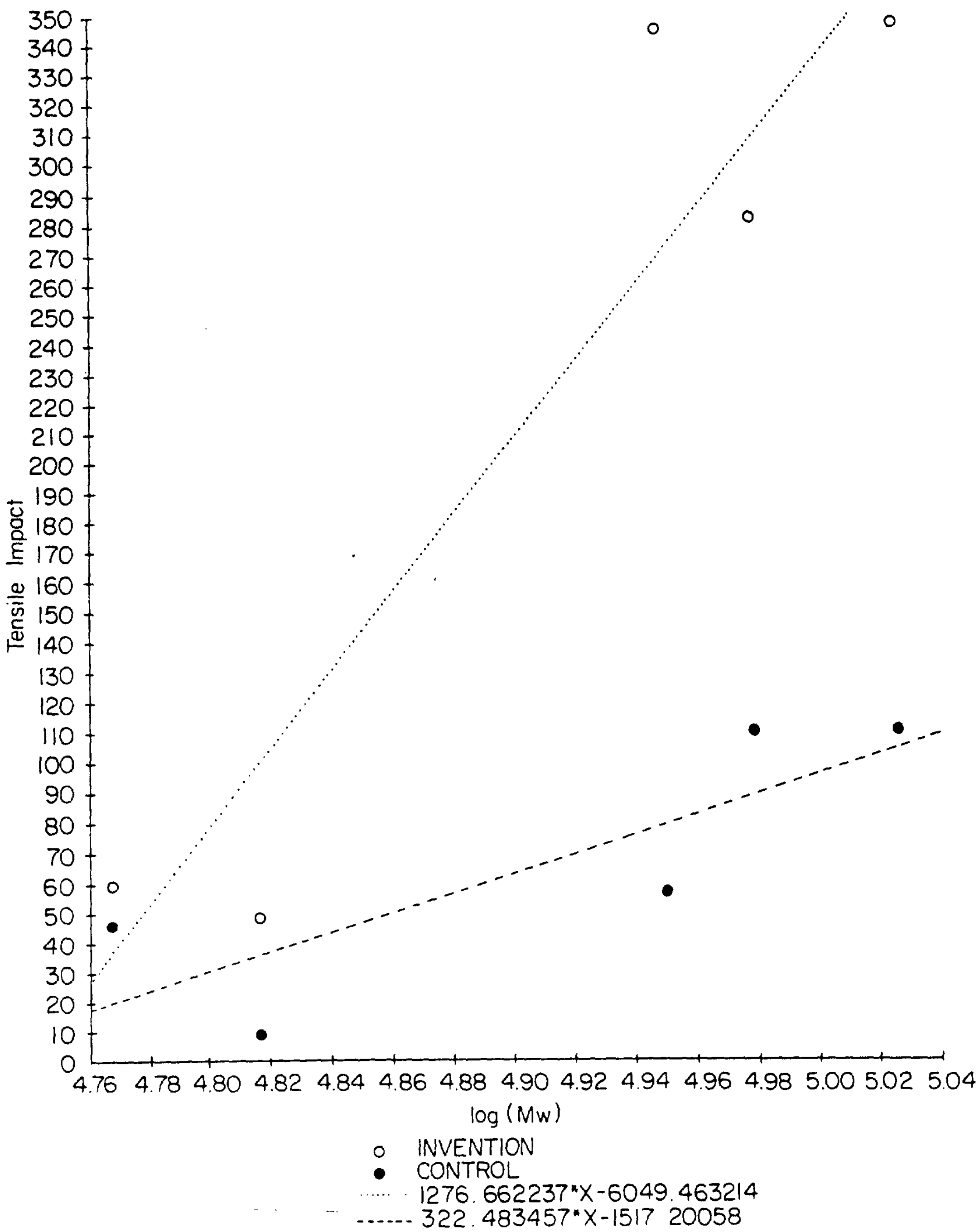

FIG. 5

Tensile Impact- Molecular Weight Advantage

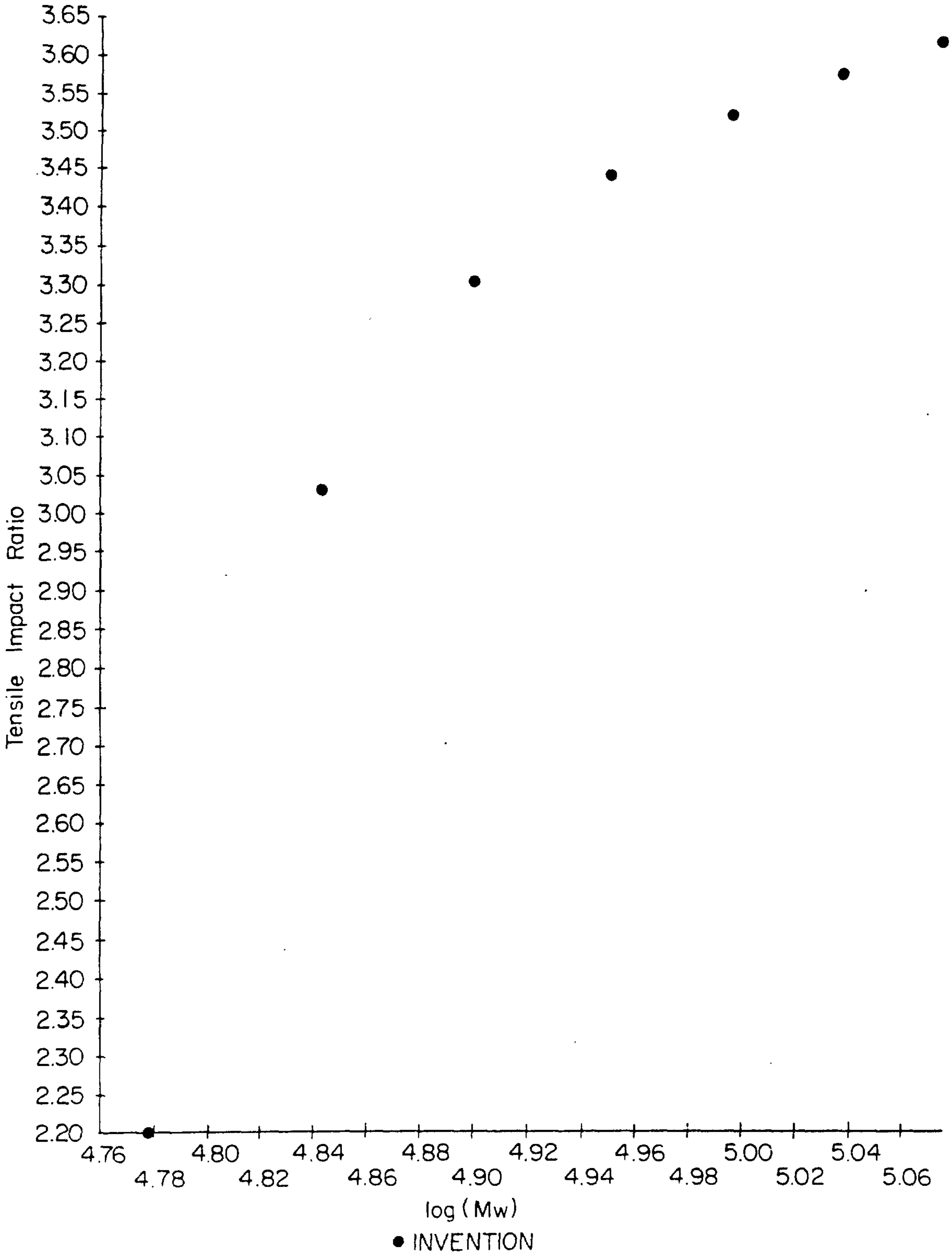

FIG.6

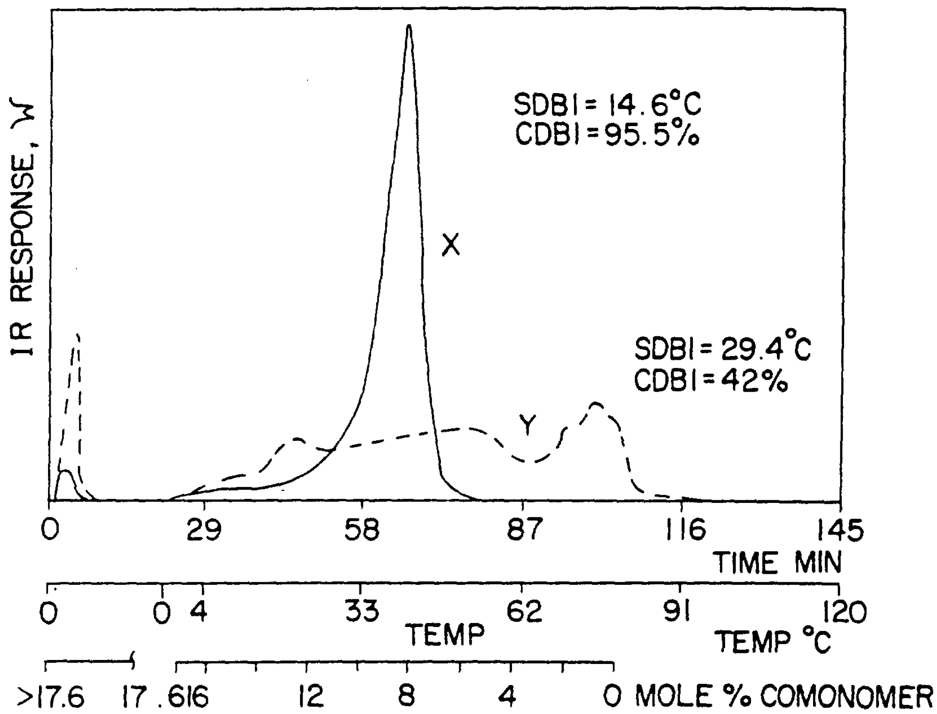
IR RESPONSE, W
SDBI = 14.6°C
CDBI = 95.5%
X
SDBI = 29.4°C
CDBI = 42%
Y
0
29
58
87
116
145
TIME MIN
0
0 4
33
62
91
120
TEMP
TEMP °C
>17.6
17 .616
12
8
4
0 MOLE % COMONOMER

FIG. 8

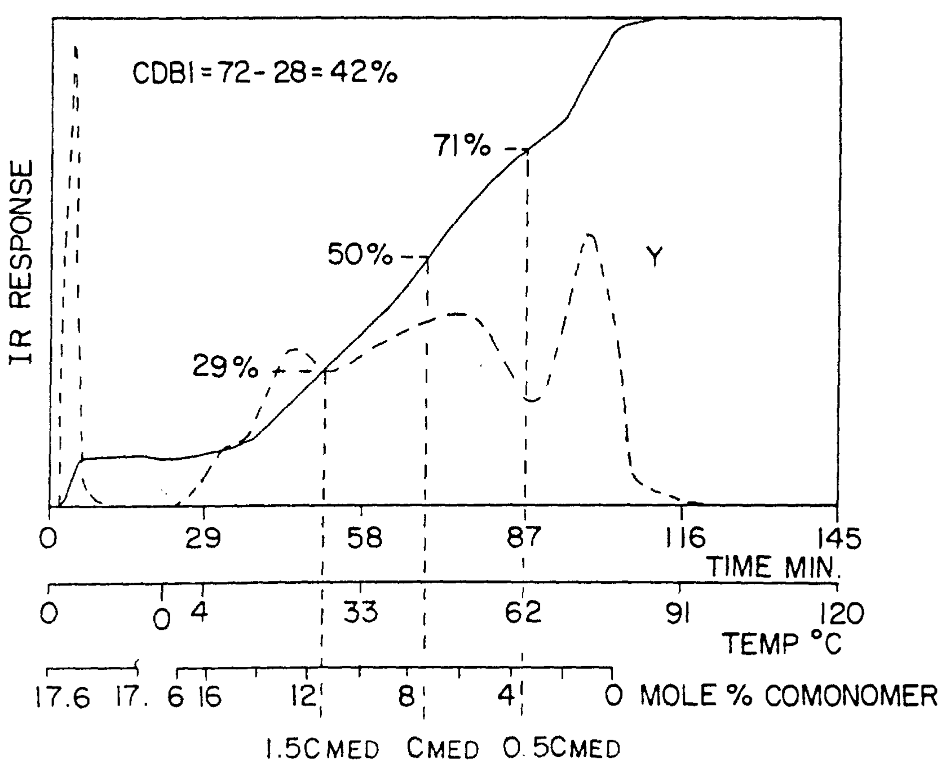
IR RESPONSE
CDBI = 72 - 28 = 42%
71%
50%
29%
Y
0
29
58
87
116
145
TIME MIN.
0
0 4
33
62
91
120
TEMP °C
17.6
17. 6 16
12
8
4
0 MOLE % COMONOMER
1.5CMED
CMED
0.5CMED

FIG. 7

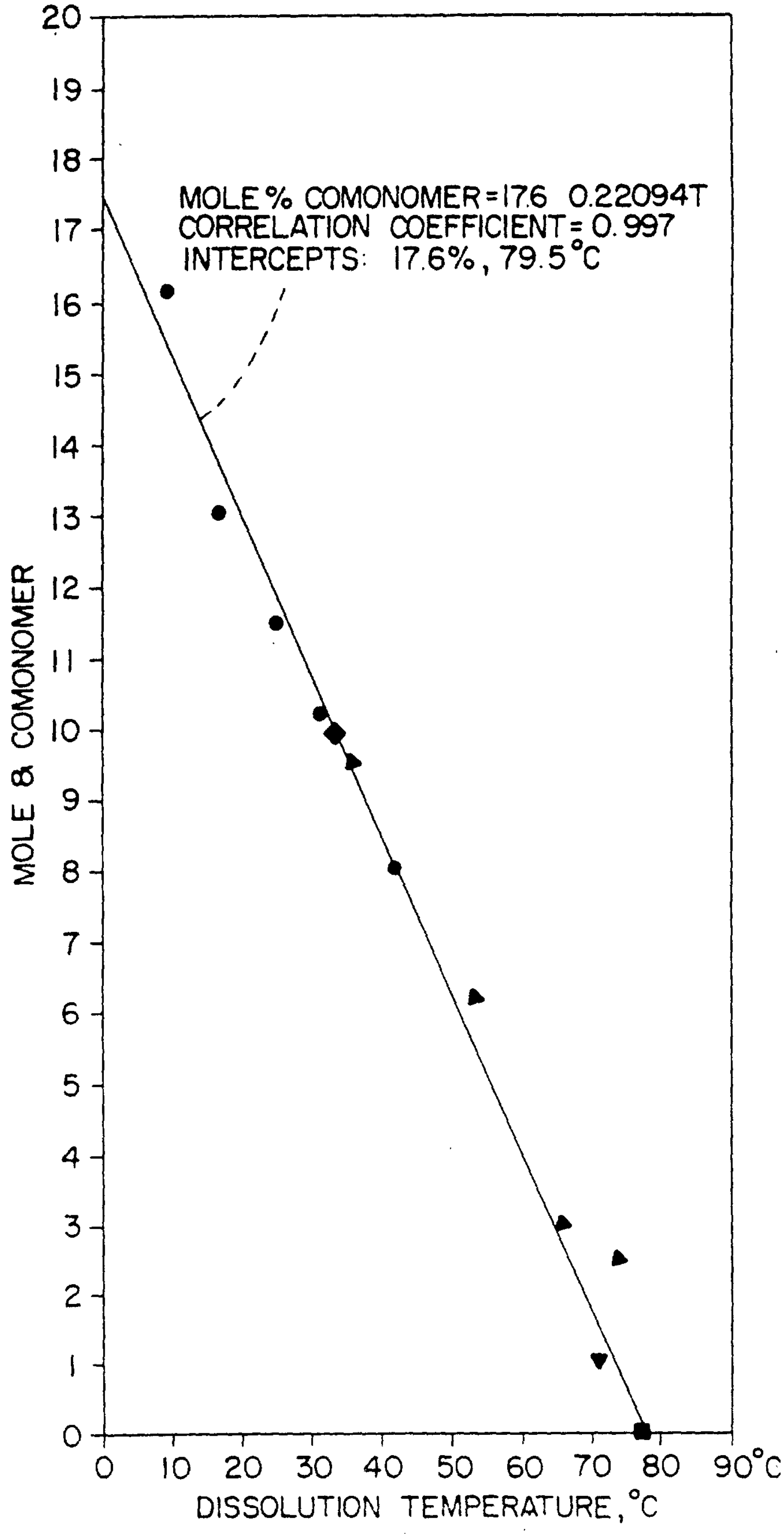
MOLE % COMONOMER = 17.6 0.22094T
CORRELATION COEFFICIENT = 0.997
INTERCEPTS: 17.6%, 79.5 °C
MOLE & COMONOMER
DISSOLUTION TEMPERATURE, °C
0
10
20
30
40
50
60
70
80
90°C
1
2
3
4
5
6
7
8
9
10
11
12
13
14
15
16
17
18
19
20

FIG. 9

Melt Tensile Force of Polyethylene vs. Molecular Weight

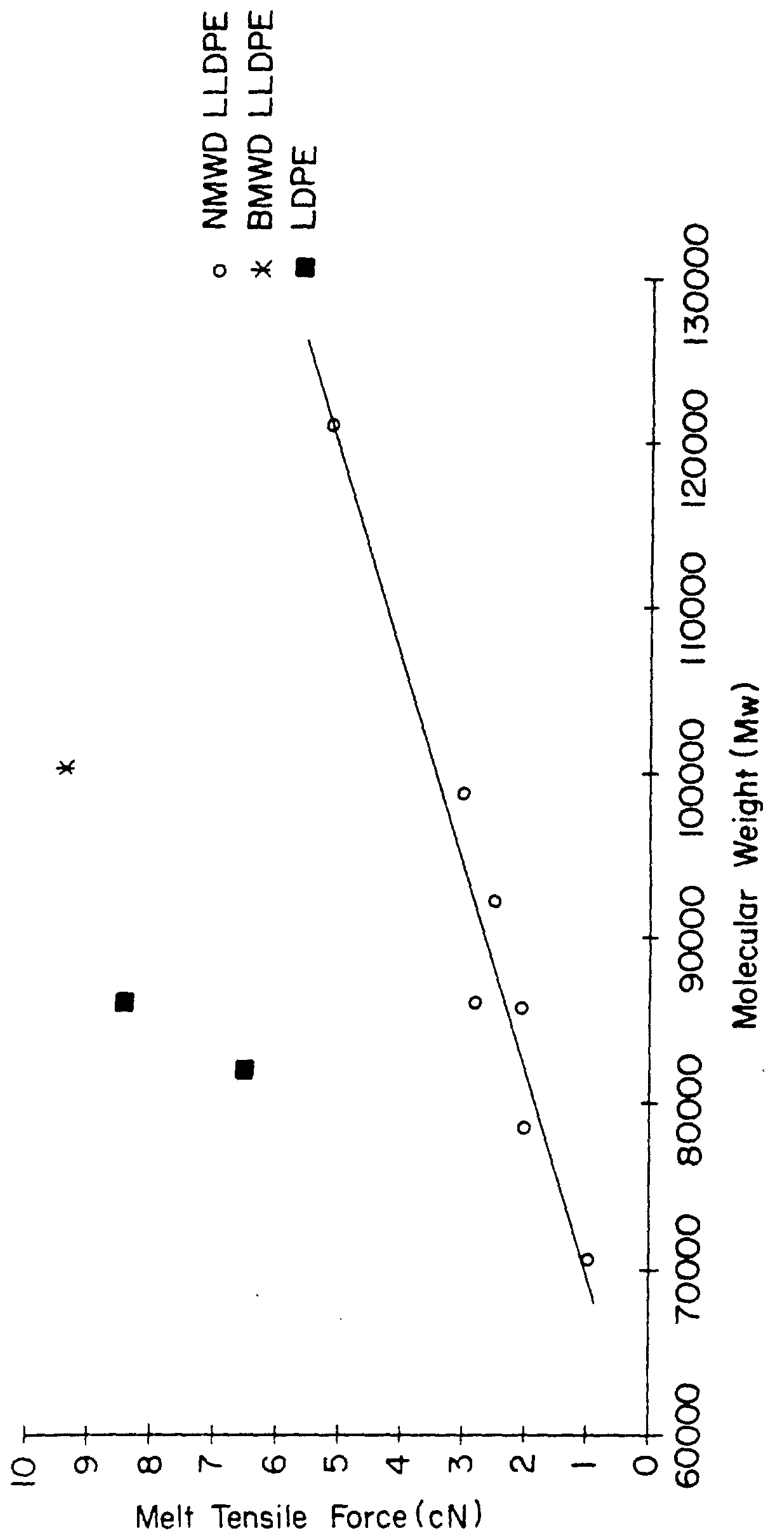

FIG. 10

Blown Film Stress- Strain Profiles